# FASCICULE DE BREVET EUROPEEN

(11) **EP 1 698 041 B1**
(45) Date de publication et mention de la délivrance du brevet: **17.09.2008**
(21) Numéro de dépôt: 04805844.0
(22) Date de dépôt: 18.11.2004
(51) Int. Cl.: H02N 1/00, H02K 57/00

(54) **DISPOSITIF D ACTIONNEMENT ELECTROSTATIQUE**
ELEKTROSTATISCHE STEUEREINRICHTUNG
ELECTROSTATIC CONTROL DEVICE

(30) Priorité: 26.12.2003 FR 0351210
(43) Date de publication de la demande: 06.09.2006
(73) Titulaire: COMMISSARIAT A L'ENERGIE ATOMIQUE, 75015 Paris (FR)
(72) Inventeur: DIVOUX, Claire, F-38000 Grenoble (FR)
(74) Mandataire: Poulin, Gérard
(86) Numéro de dépôt international: PCT/FR2004/050601
(87) Numéro de publication internationale: WO 2005/069472

(56) Documents cités:
- US-A- 5 408 355
- US-A- 6 025 951
- US-A1- 2003 168 928
- US-B1- 6 220 561
- HOLZER R ET AL: "HYBRID ELECTROSTATIC-MAGNETIC MICROACTUATORS" INTERNATIONAL CONFERENCE ON ROBOTICS AND AUTOMATION 1995, XX, XX, vol. 3, 21 mai 1995 (1995-05-21), pages 2941-2946, XP000561509

## Description

### DOMAINE TECHNIQUE

L'invention concerne un dispositif d'actionnement électrostatique à performance mécanique améliorée.

On appelle actionnement de type "zipping", ou « à fermeture progressive ou à fermeture éclair ou par glissière», un actionnement électrostatique particulier, pour lequel une électrode mobile vient accoster ou est plaquée le long d'un isolant la séparant d'une électrode fixe, ce mouvement se faisant progressivement et presque linéairement avec la tension appliquée.

Les documents 1 et 2, référencés à la fin de la présente description décrivent un "zipping" simple avec mécanisme de rappel, tandis que les documents 3 et 4 décrivent un « zipping » double.

Document US 5 408 355 A décrit un dispositif d'actionnement électrostatique comportant des moyens formant un pivot d'une portion d'une électrode mobile.

Dans les dispositifs connus, la force électrostatique est une force qui n'agit que dans une direction, en attraction entre deux électrodes. Le zipping génère des forces plus importantes mais conserve cette particularité.

Ce type d'actionnement est réalisable dans un plan, dans la mesure où il y a la place pour mettre des électrodes fixes de chaque côté de l'électrode mobile. Cependant, il est parfois souhaitable de n'avoir des électrodes que d'un côté de la partie mobile, par exemple pour des raisons d'encombrement.

Par contre, pour un déplacement de l'électrode mobile hors du plan, autant il est simple d'intégrer la première électrode fixe dans un substrat (par exemple en utilisant le substrat lui-même comme électrode fixe), autant il est compliqué de venir réaliser une deuxième électrode fixe au-dessus de l'électrode mobile. Cette deuxième électrode est source de complexité technologique, elle génère notamment des pertes optiques ou électriques.

En général, on n'utilise donc que des électrodes fixées sur le substrat, et on utilise une force opposée de nature différente, souvent purement mécanique (force de rappel), comme dans les documents 1 ou 2, en utilisant des bras de rappel supplémentaires, ou bien grâce à la force de rappel des bras de zipping eux-mêmes.

Les deux forces étant alors de natures différentes, les paramètres à maîtriser sont nombreux. Les forces sont plus difficiles à équilibrer car pas nécessairement égales, et elles ne dépendent pas des mêmes équations. Une simulation est elle aussi plus difficile à mettre en oeuvre du fait du nombre de paramètres et des phénomènes physiques à prendre en compte. En outre, la technologie est plus difficile à réaliser car les deux forces nécessitent des matériaux différents, ou des géométries différentes. Par exemple, les bras de rappel sont souvent plus fins ou d'épaisseurs différentes que dans les structures de zipping, et le contrôle des actionneurs est aussi plus difficile.

Il a donc souvent été imaginé un actionnement électrostatique dans une seule direction, avec des bras de rappel pour l'autre direction.

Une seule solution réalise un déplacement dans les deux directions opposées par zipping, elle est décrite dans le document 4. Le déplacement d'un fluide incompressible entre deux cavités permet de défléchir une membrane. Cette solution est coûteuse et le déplacement est difficile à contrôler.

IL se pose donc le problème de trouver un nouveau type d'actionneur électrostatique, permettant l'utilisation du "zipping" dans deux directions opposées.

### EXPOSÉ DE L'INVENTION

L'invention porte sur un actionnement de type zipping, dans deux directions opposées.

L'invention concerne un dispositif d'actionnement électrostatique, comportant :
- une électrode, dite électrode mobile, comportant au moins une partie mobile par rapport à un substrat,
- au moins deux électrodes, fixes par rapport au substrat, situées d'un même côté par rapport à l'électrode mobile et chacune en face d'une partie ou d'une extrémité de l'électrode mobile,
- des moyens formant au moins un pivot d'au moins une portion de l'électrode mobile.

On peut ainsi contrôler deux parties d'un actionneur, de part et d'autre du pivot, avec deux forces de même nature, de type « zipping », et plaquer chacune de ces deux parties, ou une portion de chacune de ces deux parties, contre le substrat ou contre une couche fixe par rapport au substrat, de manière progressive en fonction de la tension.

L'électrode mobile peut s'appuyer sur le pivot lorsqu'une des électrodes fixes attire la partie de l'électrode mobile en face de laquelle cette électrode fixe est située, l'autre partie de l'électrode mobile pouvant s'éloigner du substrat sous l'effet de forces mécaniques de rappel.

Selon une variante, l'invention a également pour objet un dispositif d'actionnement électrostatique, comportant :
- une partie ou membrane, dite partie ou membrane mobile ou souple par rapport à un substrat, cette partie comportant au moins deux électrodes, séparées par une portion isolante électriquement,
- au moins une électrode, fixe par rapport au substrat, située d'un même côté par rapport à la partie mobile et dont une première et une deuxième parties sont respectivement situées en face d'une des électrodes de la partie mobile,
- des moyens formant au moins un pivot d'au moins une portion de la partie ou de la membrane mobile ou souple.

La partie ou la membrane souple peut s'appuyer sur le pivot lorsqu'une des électrodes fixes attire l'une des électrodes de la partie ou de la membrane mobile ou souple, l'autre électrode mobile pouvant s'éloigner du substrat sous l'effet de forces mécaniques de rappel.

L'électrode ou la partie mobile peut être mobile suivant une direction sensiblement perpendiculaire au substrat ou à un plan principal de ce substrat.

Une couche isolante, située sur le substrat ou sur la membrane mobile, permet de séparer les électrodes fixes et l'électrode ou la partie mobile.

La partie ou la membrane mobile ou l'électrode mobile peut être reliée par un plot à une membrane, située au- dessus de l'actionneur ou de l'autre côté de l'actionneur par rapport au substrat.

Quant au pivot, il permet de maintenir au moins un point de l'électrode ou de la membrane ou de la partie mobile à distance du substrat, distance par exemple comprise enture 50 nm et 20 µm. Il comporte par exemple au moins un plot, fixe par rapport au substrat, ou, selon un autre exemple, au moins un bras disposé d'un côté de la partie mobile de l'électrode mobile ou de la membrane mobile. Avantageusement, il comporte deux bras disposés de part et d'autre, le système étant alors symétrique.

Une charge peut être disposée sur la membrane mobile ou souple, en décalage latéral par rapport aux moyens formant pivot. Cette charge peut ainsi avoir une amplitude supérieure à la hauteur des moyens formant pivot. Un point de la membrane disposé en décalage latéral par rapport aux moyens formant pivot a une amplitude supérieure à la hauteur de ces moyens. Par exemple, les moyens formant pivot sont disposés de manière dissymétrique entre deux électrodes fixes, ou non centrée par rapport entre ces électrodes fixes, et un point de la partie centrale de l'électrode ou de la membrane souple a une amplitude supérieure à celle des moyens formant pivot.

La partie mobile de l'électrode ou de la membrane mobile peut former un coude, ce qui autorise un débattement important.

Un mouvement non linéaire d'une charge située sur la partie mobile peut être compensé par une structure comportant quatre électrodes fixes, disposées deux à deux l'une en face de l'autre, l'électrode ou la membrane mobile comportant deux parties mobiles disposées en croix.

Les extrémités de l'électrode ou de la membrane mobile peuvent être libres, ou comporter au moins une partie fixe ou encastrée ou fixée sur, ou dans, le substrat ou une couche isolante. Selon un exemple, des moyens magnétiques, fixes par rapport au substrat, coopèrent avec des moyens magnétiques de l'électrode ou de la membrane mobile pour assurer une position fixe des extrémités de l'électrode ou de la membrane par rapport au substrat.

Selon un mode de réalisation, l'électrode ou la membrane mobile comporte au moins deux parties mobiles, par exemple parallèles entre elles, chacune étant libre à une de ses extrémités, une électrode fixe étant en face de chaque partie mobile. L'extrémité libre de chaque partie mobile présente une grande souplesse, supérieure à celle d'un point situé entre les extrémités de l'électrode ou de la membrane mobile si ces extrémités étaient fixes. Ces extrémités libres permettent de venir en contact au-dessus de l'électrode fixe grâce à de faibles tensions.

Par exemple, l'électrode ou la membrane mobile comporte trois parties mobiles, les électrodes fixes étant au nombre de trois, chacune située en face d'une partie de l'électrode mobile.

Les parties mobiles de l'électrode ou de la membrane mobile peuvent être de forme sensiblement allongée selon une direction, au moins deux électrodes fixes étant décalées l'une par rapport à l'autre dans cette direction. Selon des variantes, les parties mobiles peuvent être positionnées avec un angle aigu, ou avec des décalages latéraux, ce qui confère une stabilité mécanique dans le plan du substrat.

En vue de réaliser un contacteur, un élément de contact électrique peut être fixé sur la partie mobile. Il permet d'établir un contact entre deux pistes ou zones conductrices dans une position donnée de l'électrode ou de la membrane mobile. Une capacité variable peut aussi être formée, par une armature fixe, et une armature mobile, dont la distance par rapport à l'armature mobile est définie par les tensions appliquées à l'actionneur.

Selon une variante, l'électrode ou la membrane mobile, les électrodes fixes et le pivot sont réalisés sensiblement dans un plan en surface du substrat.

Par ailleurs, l'électrode ou la membrane mobile peut comporter des éléments ou des moyens magnétiques, ou étant elle-même partiellement magnétique, et coopérant avec des éléments ou des moyens magnétiques fixes par rapport au substrat. Cet ensemble d'éléments magnétiques confère une stabilité au système. Au moins deux positions stables peuvent ainsi être réalisées.

De préférence, la force électrostatique et les forces magnétiques mises en jeu lors d'un contact ont une différence relative d'au moins 10 %.

Les forces de rappel mécanique sont quant à elles de préférence inférieures ou très inférieures à la force électrostatique et aux forces magnétiques mises en jeu lors d'un contact, par exemple au moins 10 fois inférieures.

Diverses applications sont concernées par un dispositif d'actionnement selon l'invention, et notamment des systèmes d'actionnement de moyens formant support d'un composant optique ou d'un composant optique lui-même.

L'invention concerne également un procédé de réalisation d'un dispositif selon l'invention, comportant:
- la réalisation d'un premier substrat, comportant une ou deux électrodes fixes par rapport au substrat,
- la réalisation de moyens formant pivot et d'une électrode ou d'une membrane mobile, comportant au moins deux électrodes séparées par une portion isolante, cet électrode ou cette membrane étant mobile par rapport au substrat.

L'électrode ou la membrane mobile peut être réalisée sur une couche sacrificielle formée ou déposée sur le substrat, puis éliminée après formation de la membrane ou de l'électrode mobile.

Elle peut aussi être réalisée en surface d'un deuxième substrat assemblé ensuite avec le premier.

L'électrode ou la membrane mobile est alors ensuite dégagée de la surface du deuxième substrat par amincissement de celui - ci.

Les moyens formant pivot sont par exemple formés sur le premier substrat.

### BRÈVE DESCRIPTION DES DESSINS

- Les figures 1A à 2B représentent des variantes d'un premier mode de réalisation de l'invention,
- la figure 3 représente un autre mode de réalisation de l'invention, avec une membrane reliée aux contacteurs,
- les figures 4A - 4B représentent deux autres modes de réalisation de l'invention, les extrémités de l'électrode mobile étant encastrées, ou étant maintenues par des moyens magnétiques,
- la figure 5 représente un mode de réalisation en plan ou en surface d'un substrat,
- les figures 6 et 7 représentent deux autres modes de réalisation de l'invention, avec actionneur formant un coude ou une croix,
- les figures 8A - 8E représentent des variantes d'un actionneur avec trois parties mobiles,
- les figures 9A - 11C sont des exemples d'actionneurs avec contact électrique et/ou moyens magnétiques,
- les figures 12A - 12B sont des étapes de réalisation d'un dispositif selon l'invention,
- les figures 13A - 14B expliquent des variantes de dispositifs selon l'invention,
- les figures 15A - 15B représentent un autre type de dispositif selon l'invention, pouvant être utilisé en tant que micro-miroir ou micro-lentille,
- les figures 16A - 17B représentent des variantes d'un dispositif selon l'invention, pouvant être utilisé en tant que micro-miroir ou micro-lentille,
- les figures 18A - 18L sont des étapes de réalisation d'un dispositif selon l'invention,
- la figure 19 représente un autre mode de réalisation d'un dispositif selon l'invention,
- les figures 20A - 20G représentent des étapes de réalisation d'un autre type de dispositif selon l'invention,
- les figures 21A - 21E représentent d'autres étapes de réalisation d'un autre type de dispositif selon l'invention,
- les figures 22A - 22C représentent le fonctionnement schématisé d'un dispositif selon l'invention,
- les figures 23 et 24 représentent d'autres aspects d'un dispositif selon l'invention.

### EXPOSÉ DÉTAILLÉ DE MODES DE RÉALISATION PARTICULIERS

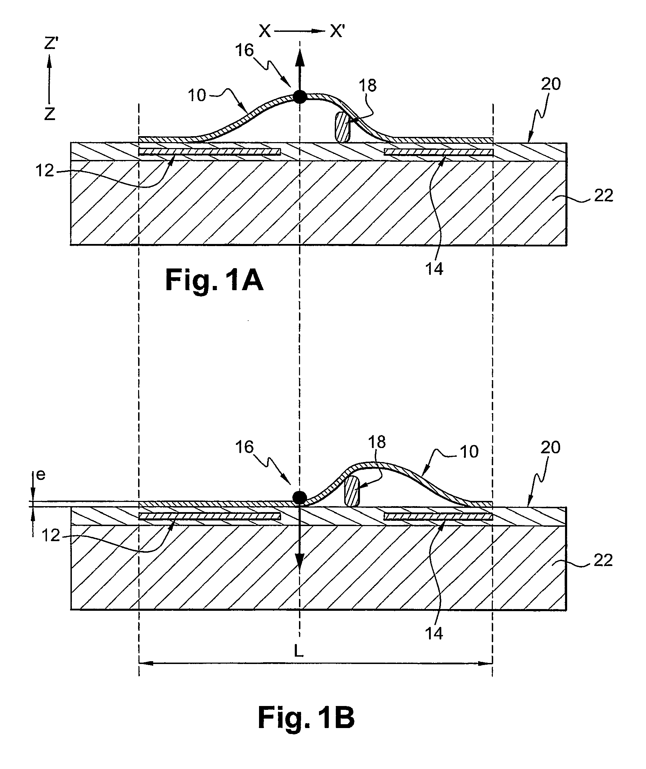

Un exemple d'un dispositif selon l'invention est représenté sur la figure 1A.

Une électrode fixe 12, 14 est située en face de chaque extrémité d'une structure ou électrode 10 mobile ou souple, ou une membrane mobile ou souple, dont un point repose sur une butée ou un plot ou un pivot 18, positionné en décalage latéral (c'est-à-dire suivant la direction XX') par rapport à l'emplacement 16 d'une charge, par exemple une charge mécanique ou un contact mécanique ou électrique ou un composant électrique ou optique.

Cet ensemble est aussi appelé actionneur.

La structure mobile 10 est isolée des électrodes fixes 12, 14 par une, ou des, couches isolantes 20. Ces couches sont situées sur la structure fixe, comme illustré sur la figure 1A, mais elles peuvent aussi être sur la structure mobile, celle-ci comportant par exemple une bicouche comportant une couche isolante et une couche d'électrode. L'ensemble constitué par les électrodes fixes et, éventuellement, la ou les couches isolantes, repose sur un substrat 22.

Le pivot 18 permet de maintenir un point de l'électrode mobile à une hauteur minimale, éventuellement à une hauteur fixe, par rapport au substrat 22. Cette hauteur est mesurée suivant l'axe ZZ', perpendiculaire au plan de la couche isolante 20. Selon un exemple le pivot a une hauteur par exemple comprise entre quelques dizaines de nanomètres, par exemple 50 nm, et 10 µm ou 20 µm. Il peut avoir une hauteur de l'ordre de quelques µm.

La membrane 10 a, quant à elle, une longueur L qui peut être de l'ordre de quelques centaines de µm ou encore comprise entre, par exemple, 50 µm et 1 mm. Sa largeur, mesurée selon une direction perpendiculaire au plan de la figure 1A ou 1B, est de l'ordre de quelques µm ou de quelques dizaines de µm, par exemple comprise entre 5µm et 50 µm. L'épaisseur e de la membrane peut être comprise entre 500 nm et 5 µm, par exemple égale à environ 1 µm. Toutes ces valeurs sont données à titre indicatif et des dispositifs selon l'invention peuvent être réalisés avec des valeurs numériques en dehors des plages indiquées ci-dessus.

La membrane a une raideur mécanique lui permettant, par l'effet de forces mécaniques, d'être ramenée en position haute lorsque la tension est relâchée (voir figure 1A).

Une différence de potentiel est appliquée entre l'électrode mobile 10 et chaque électrode fixe 12, 14. Cette différence de potentiel génère une force électrostatique en attraction, ou en répulsion, entre les deux électrodes de chaque couple d'électrodes (électrode mobile, électrode fixe). Cette force est facilement contrôlable avec la différence de potentiel. Des moyens de contrôle de cette différence de potentiel sont prévus mais non représentés sur la figure. La membrane et le plot peuvent être en matériau conducteur ou semi-conducteur, ou comporter des éléments en de tels matériaux, ce qui permet d'appliquer une tension à la membrane via le plot 18.

Si on diminue la différence de potentiel (ddp) entre l'électrode fixe 12 et l'électrode mobile 10, et si on augmente la ddp entre l'électrode fixe 14 et l'électrode mobile 10, la structure mobile bascule progressivement du côté de l'électrode fixe 14, et la charge 16 monte suivant l'axe ZZ'(figure 1A).

Si on augmente la ddp entre l'électrode fixe 12 et l'électrode mobile 10, et si on diminue la ddp entre l'électrode fixe 14 et l'électrode mobile 10, la structure mobile bascule progressivement du côté de l'électrode fixe 12, et la charge 16 descend le long de l'axe ZZ' (figure 1B) .

Le pivot constitue ainsi un point d'appui pour la structure mobile, lorsque celle-ci est attirée par l'une ou l'autre des électrodes fixes 12, 14 : en fait la partie centrale, ou mobile, de la membrane monte et descend sous l'effet conjugué de forces électrostatiques et de forces mécaniques, donc de natures différentes. L'amplitude du mouvement de cette partie est supérieure à la hauteur du pivot 18.

Dans un dispositif actionneur selon l'invention, chacune des électrodes fixes permet de plaquer la partie de l'électrode mobile en face de laquelle elle est située, de manière progressive contre le substrat en fonction de la tension appliquée.

L'électrode mobile, dont une partie est plaquée sur le substrat, s'appuie alors sur le pivot, l'autre partie de l'électrode mobile, pour laquelle la tension appliquée est relâchée, étant éloignée du substrat sous l'effet de forces mécaniques de rappel.

Cette action conjuguée des forces électrostatiques d'un côté, et de forces mécaniques de rappel de l'autre côté permet d'atteindre une amplitude importante, supérieure à la hauteur du pivot.

Dans la description ci-dessus, le pivot est un plot. Cependant d'autres moyens peuvent être mis en oeuvre pour réaliser le pivot : par exemple des bras mécaniques de part et d'autre du point où est placée la charge, ce qui a pour avantage de limiter le mouvement latéral (perpendiculaire au plan des figures 1A et 1B) de ce point. Une réalisation avec un seul bras latéral est possible, mais moins stable que la précédente. Là encore, le choix des matériaux constitutifs du ou des des bras permet d'appliquer une tension à la membrane via le ou les bras.

Le pivot 18 peut être construit dans la partie mobile, ou dans les parties fixes. Il peut être placé en dessous, ou dans le plan de la partie mobile 10.

Le fluide entre électrode mobile et électrodes fixes peut être de l'air ou un autre fluide, plus ou moins visqueux. Sa perméabilité est de préférence la plus haute possible, avec une bonne tenue au champ électrique, et au vieillissement.

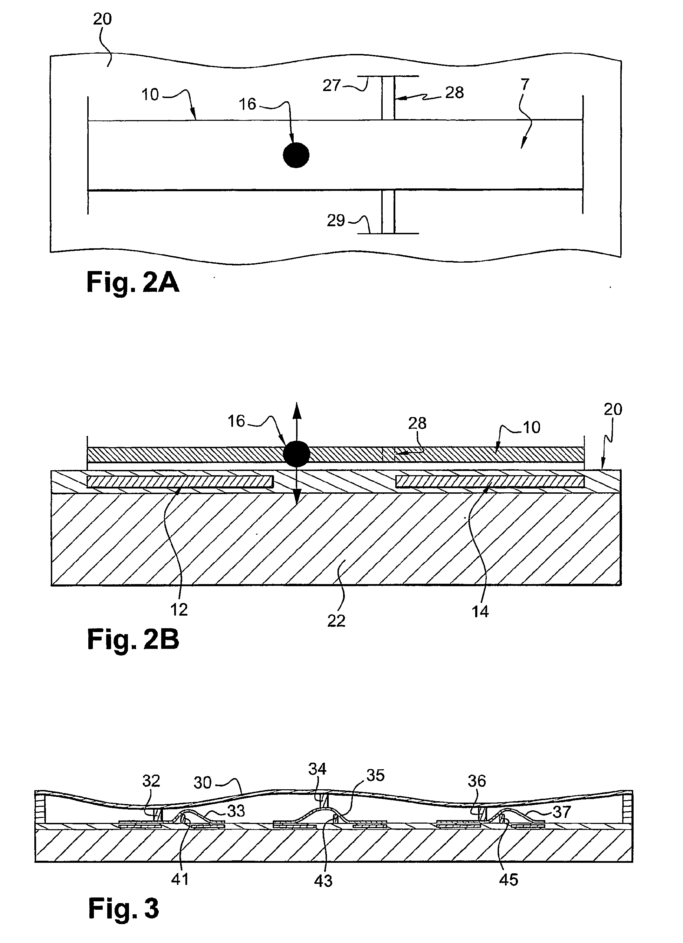

Les figures 2A et 2B représentent, respectivement en vue de dessus et de côté, un mode de réalisation où le pivot comporte des bras 28 s'étendant de part et d'autre de la membrane mobile 10, sensiblement dans un plan défini par cette partie mobile, par exemple lorsque celle-ci est au repos.

Dans l'exemple des figures 2A et 2B, les extrémités 27, 29 de ces bras sont maintenues fixes par rapport au substrat, à l'aide de moyens non représentés sur ces figures, par exemple par encastrement dans ce plan.

En variante, les bras peuvent s'étendre de part et d'autre de la membrane mobile, mais au-dessous de celle - ci, formant une butée en dessous de laquelle un point de la membrane ne peut jamais descendre en direction du substrat.

Selon encore une autre variante, il n'y a qu'un seul bras, sur un côté. La solution avec deux bras présente l'avantage de la symétrie, notamment du point de vue mécanique, du système.

Ce mode de réalisation, avec un ou des bras, permet d'avoir des forces importantes, et de limiter les effets de striction ou de collage sur les parties mécaniques proches de la structure mobile : en effet, dans le mode de réalisation des figures 1A et 1B, la structure mobile peut s'altérer par friction sur le plot 18.

Selon un mode de réalisation particulier, illustré en figure 3, un ou plusieurs actionneur(s) 33, 35, 37 peut/peuvent être suspendu(s) ou reliés à une membrane 30, chacun par un plot 32, 34, 36 qui permet de maintenir une distance constante entre l'actionneur et cette membrane. Par ailleurs un pivot 41, 43, 45 assure le maintien d'au moins un point de chaque actionneur à une distance minimale du substrat, comme expliqué ci-dessus.

La membrane 30 peut être plus ou moins souple ou rigide, par exemple semi-rigide. Elle peut supporter des composants optiques, ce qui est un exemple d'application au domaine de l'optique adaptative.

Dans les exemple ci-dessus, les extrémités des membranes mobiles 10, 33, 35, 37 peuvent être plus ou moins libres par rapport au substrat 22 ou à la couche isolante 20 qui le recouvre : ces extrémités latérales ne sont pas nécessairement encastrées dans, ou sur, cette couche ou ce substrat. Ainsi, dans l'exemple de la figure 3, les extrémités de chaque actionneur, qui est lié à la membrane 30 par un plot 32, 34, 36 peuvent très bien être libres.

Il est également possible de maintenir les extrémités de l'électrode mobile plaquées contre le substrat par le simple effet de faibles tensions entre électrode mobile et l'électrode fixe correspondante.

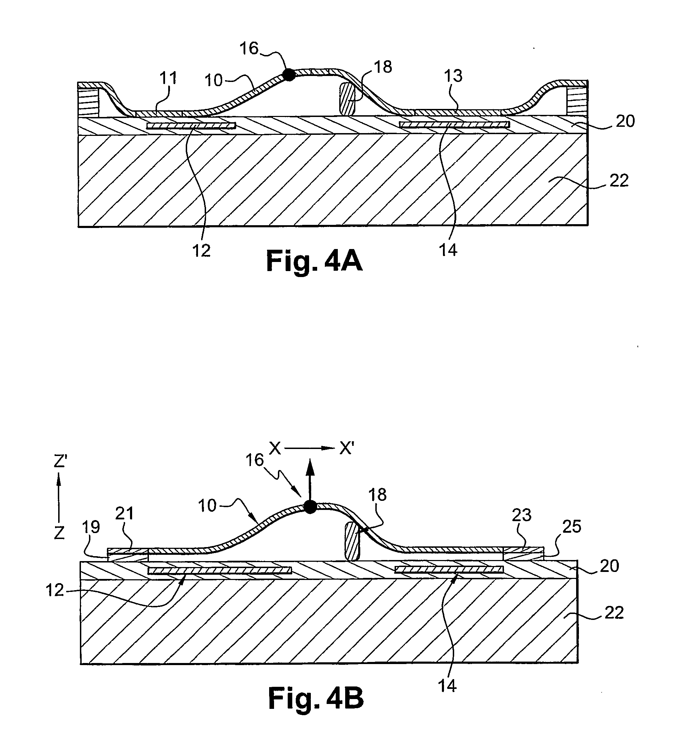

Dans le mode de réalisation illustré en figure 4A les extrémités 11, 13 de l'élément mobile 10 de l'actionneur sont intégrées dans, ou sur, la couche isolante 20 ou le substrat 22. Ces extrémités sont par exemple fixées en surface de la couche isolante. Selon une variante, une seule des deux extrémités est ainsi encastrée.

Selon un autre mode de réalisation (figure 4B), les extrémités de l'élément mobile 10 de l'actionneur comporte des moyens magnétiques ou des zones magnétiques 21, 23. La partie mobile peut elle - même être partiellement en un matériau magnétique ; par exemple elle comporte une couche isolante (par exemple en nitrure), une première couche de matériau magnétique (par exemple en FeNi), une deuxième couche de matériau isolant (par exemple en nitrure). Des aimants 19, 25, fixes par rapport au substrat 22, permettent alors de maintenir les extrémités magnétiques ou magnétisées de l'élément mobile fixes par rapport au substrat 22.

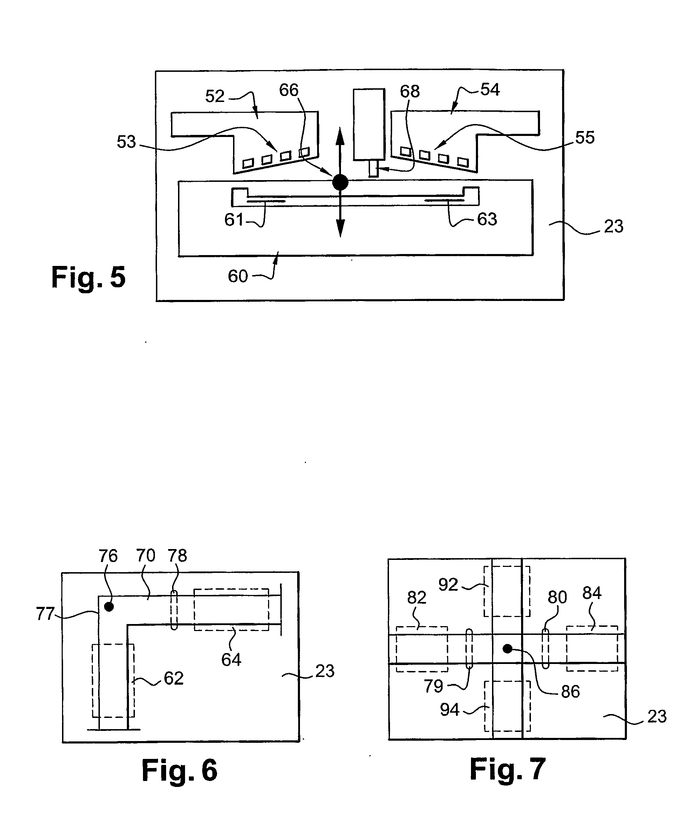

La figure 5 est un exemple d'intégration d'un actionneur dans un plan, en l'occurrence le plan supérieur d'un substrat 23 ou d'une couche isolante déposée dessus.

L'ensemble des éléments : électrodes 52, 54, poutre 60, pivot 68 sont formés dans cette couche ou ce plan, par gravure. En particulier, une cavité est gravée sous la poutre 60, qui est ainsi libérée du substrat et peut se mouvoir, ainsi que la charge 66, selon la flèche indiquée sur la figure, selon une direction sensiblement perpendiculaire aux électrodes.

Une couche sacrificielle utilisée lors de la gravure peut être en oxyde ou en matériau polymère, selon la sélectivité de gravure par rapport à la structure.

Ce mode de réalisation permet d'obtenir une grande compacité.

Selon une variante, des aimants 53, 55 sont intégrés dans les électrodes 52, 54, les parties latérales de la poutre 60 incorporant des éléments magnétiques 61 63, par exemple des noyaux en un matériau magnétique tel que du FeNi. Les aimants et le matériau magnétique peuvent être déposés sur la structure mobile et sur la structure fixe, et protégés par une couche qui résiste à la gravure de la couche sacrificielle sous la poutre 60.

Des formes plus complexes peuvent être réalisées.

Par exemple, il est possible de faire varier l'épaisseur et la forme de la partie mobile 60. Celle - ci peut présenter une épaisseur plus faible à ses extrémités (comme d'ailleurs illustré sur la figure 5) pour limiter la tension qui s'y applique et pour laquelle l'électrode mobile vient se plaquer sur l'électrode fixe.

Selon une autre variante, la partie mobile 60 peut être libre à ses extrémités et rattachée au plot 68.

Dans les modes de réalisation présentés, l'isolant 20 peut être par exemple du nitrure, ou de l'oxyde. Dans le cas de la figure 5, un isolant, là encore par exemple du nitrure ou de l'oxyde, peut être formé sur les électrodes 52, 54, et/ou sur l'électrode mobile 60.

Dans les divers modes de réalisation présentés, les différents éléments de la structure (membrane, électrodes, partie mobile, plot) peuvent être en silicium, en nitrure si elles sont recouvertes au moins en partie par un métal, ou encore en aluminium. D'autres matériaux sont encore possibles.

Les actionneurs peuvent être réalisés avec une configuration permettant plus de débattement. Dans la configuration illustrée sur la figure 5, la poutre exerce une résistance mécanique naturelle à l'allongement, ce qui limite son débattement.

La configuration de la figure 6 est une vue de dessus d'un ensemble substrat 23 - pivot 78 - poutre 70 électrodes fixes 62, 64. Ces dernières sont en fait sous une couche isolante qui recouvre le substrat 22. La poutre a une forme qui fait un angle ou un coude 77, ce qui assure un meilleur débattement de la charge 76. Sur la figure 6, cet angle est un angle droit, mais ce pourrait aussi être un angle inférieur à 90° ou supérieur à 90°.

Par contre, cette configuration peut produire une rotation du point où est fixée la charge.

La configuration de la figure 7 pallie ce défaut avec quatre bras et quatre électrodes fixes 82, 84, 92, 94. Les électrodes opposées 92, 94 peuvent être connectées ensemble, ainsi que les électrodes 82, 84. Les références 79, 80 désignent deux pivots. La référence 86 désigne la charge qui, dans ce mode de réalisation, ne subit pas de rotation.

Pour ces modes de réalisation des fig. 6 et 7, les extrémités ne doivent pas nécessairement être encastrées. On peut les maintenir plaquées contre le substrat par le jeu de tensions, comme déjà indiqué ci-dessus dans le cadre d'un autre mode de réalisation.

Là encore, le plot 78 peut être remplacé par des bras non représentés sur la figure 6, mais similaires à ceux de la figure 2A, et disposés de part et d'autre de la membrane. Comme déjà expliqué ci-dessus, un seul bras est également possible.

Lors de la réalisation, les extrémités de la membrane seront tenues par le plot 78, ou par les bras latéraux.

Quel que soit le mode de réalisation, les deux paramètres pour le réglage de la force sont les tensions entre électrodes.

Le choix de l'épaisseur de la membrane mobile va permettre de régler facilement la raideur de l'actionneur pour la résistance aux chocs, aux vibrations, les temps de réponse, etc. Plus la partie mobile est épaisse, plus l'actionneur est rigide. La tension à appliquer pour le même déplacement est alors plus importante.

Quelle que soit la configuration retenue, les débattements peuvent aussi être augmentés linéairement avec la longueur des parties mobiles qui forment des bras de levier.

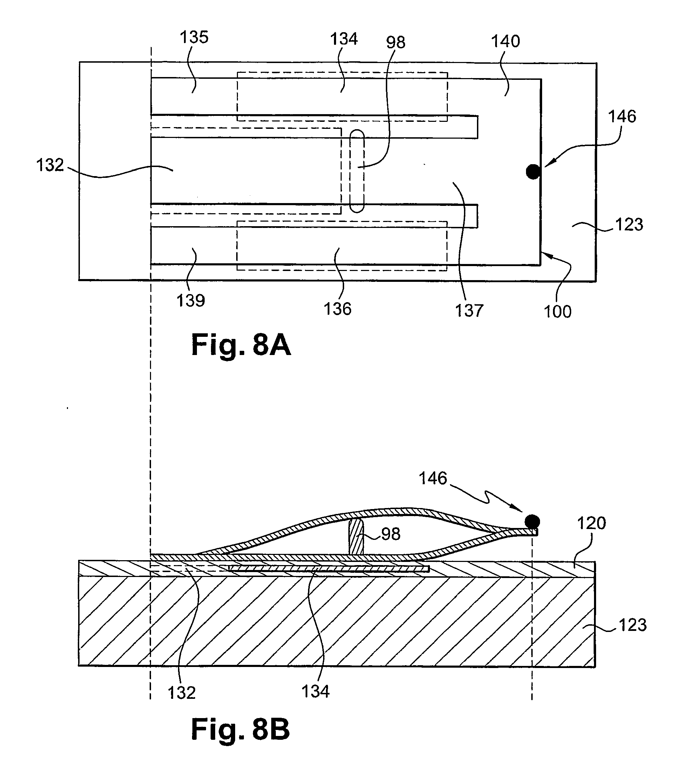

La configuration des figures 8A - 8C est plus symétrique et favorise également les très grands débattements.

Dans un substrat 123 sont réalisés une trois électrodes fixes, une électrode centrale 132 et deux électrodes latérales 134, 136.

La partie ou la membrane ou l'électrode mobile comporte trois zones ou bandes parallèles 135, 137, 139, dont les extrémité libres sont reliées par une partie commune 140 qui supporte une charge 146 et qui leur est sensiblement perpendiculaire. L'autre extrémité de chacune de ces bandes est maintenue fixe par rapport au substrat 123, soit par tension électrostatique, soit par fixation ou encastrement, soit par moyens magnétiques, ces différentes variantes ayant déjà été décrites ci-dessus, notamment en liaison avec les figures 4A et 4B.

Pour plus d'efficacité, les électrodes latérales 134, 136 sont décalées, par rapport à l'électrode centrale 132, vers l'extrémité mobile 140 de l'actionneur. Il serait également possible, mais moins efficace, de réaliser 3 électrodes sans aucun décalage entre elles.

La partie centrale 137 peut reposer sur un pivot 98. Selon une variante, un pivot est prévu sous chaque partie latérale, mais il n'y a pas de pivot sous la partie centrale.

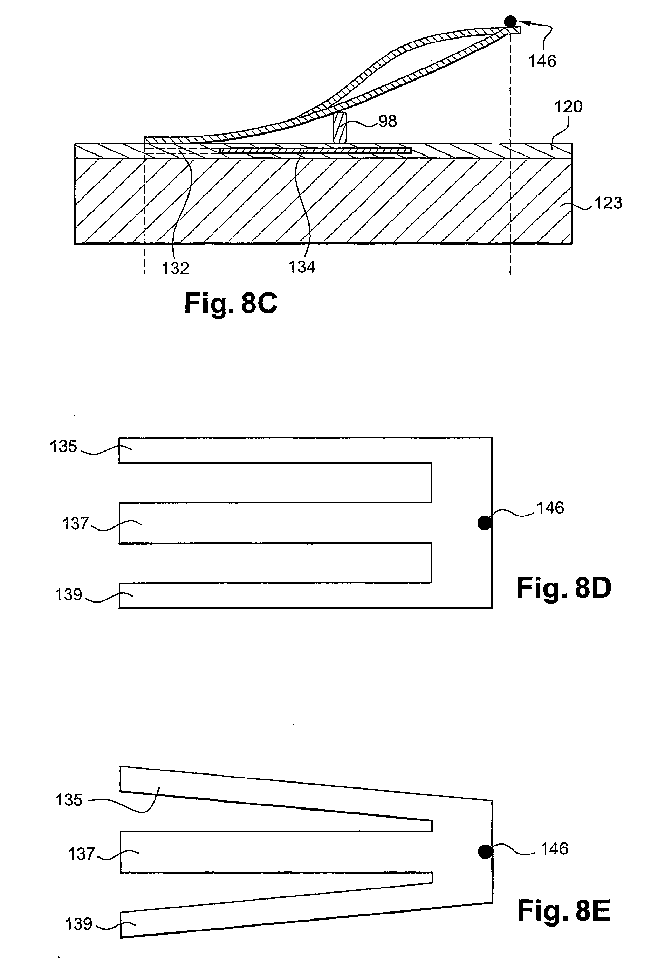

En faisant varier les tensions entre les électrodes fixes 132, 134, 136 et l'électrode mobile il est possible d'actionner la charge en position basse (figure 8B) et en position haute (figure 8C) par rapport au substrat 123.

Chacune des électrodes fixes permet de plaquer la partie de l'électrode mobile en face de laquelle elle est située, de manière progressive contre le substrat en fonction de la tension appliquée.

Lorsque la partie centrale 137 de l'électrode mobile est attirée et plaquée vers le substrat par effet électrostatique, elle s'appuie alors sur le pivot 98, les parties latérales 135, 139, pour lesquelles les tensions d'attraction vers le substrat sont relâchées, s'éloignent du substrat sous l'effet de forces mécaniques de rappel (cas de la figure 8C), ce qui contribue à faire s'éloigner du substrat la charge 146.

Lorsque les parties latérales 135, 139 de l'électrode mobile sont attirée et plaquées vers le substrat par effet électrostatique, la partie centrale 137, pour laquelle la tension d'attraction vers le substrat est relâchée, et qui s'appuie alors encore sur le pivot 98, s'éloigne du substrat sous l'effet de forces mécaniques de rappel (cas de la figure 8B) ce qui contribue à rapprocher du substrat la charge 146.

Lorsque ce sont les parties latérales qui reposent chacune sur un plot, la partie centrale n'ayant pas de pivot, le fonctionnement du système tel qu'expliqué ci-dessus repose alors toujours sur les mêmes principes : à savoir, une attraction des parties latérales par effet électrostatique vers le substrat, la partie centrale montant sous l'effet de forces de rappel mécaniques lorsque la tension s'attraction sur cette partie centrale se relâche; lorsque la partie centrale est attirée par effet électrostatique vers le substrat, ce sont les parties latérales qui montent sous l'effet de forces de rappel mécaniques lorsque les tensions d'attraction de ces parties latérales vers le substrat se relâchent.

Cette action conjuguée des forces électrostatiques d'un côté, et de forces mécaniques de rappel de l'autre côté permet d'atteindre une amplitude importante pour l'extrémité libre 140.

Les bras 135, 139 peuvent être écartés de la partie centrale 137, latéralement ou angulairement, pour favoriser la stabilité du côté de l'encastrement. De manière schématique, les figures 8D et 8^{E} représentent respectivement le cas de bras écartés latéralement et de bras écartés angulairement.

Les bras 135, 137, 139 sont dessinés rectilignes sur les figures 8A - 8^{E}, mais ils peuvent avoir n'importe quelle forme.

Selon une variante, un dispositif selon l'invention peut aussi ne comporter que deux bras, par exemple les bras 135 et 137, et par exemple un pivot sous l'un des deux bras. Le dispositif est alors moins stable.

L'invention peut servir également à la réalisation de micro-commutateurs électriques ou optiques, ou de capacités variables.

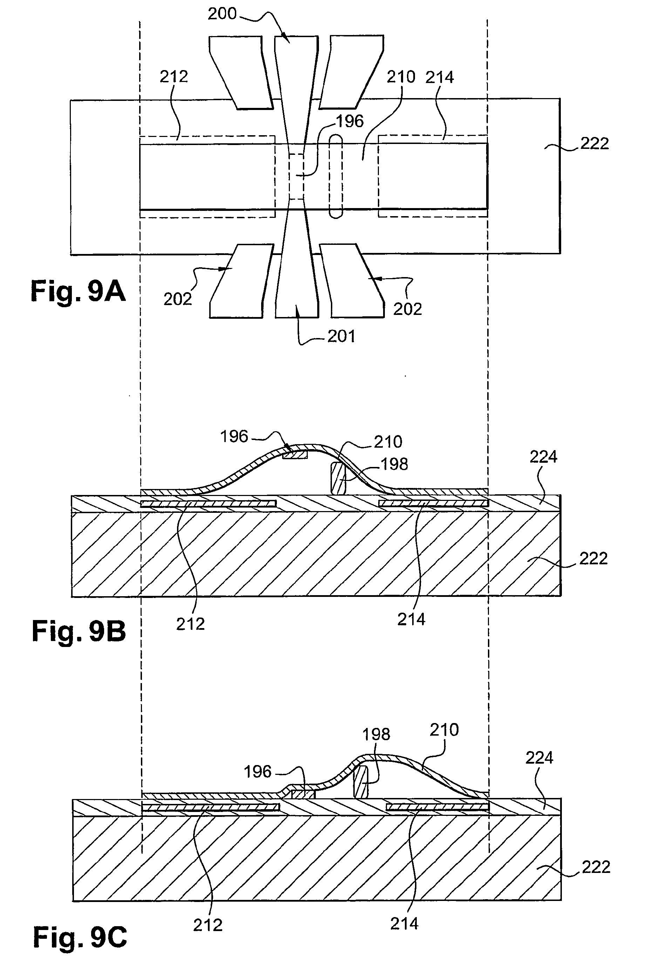

Les figures 9A - 9C représentent une réalisation d'un commutateur électrique, en vue de dessus (fig 9A) et de côté (9B et 9C), respectivement en position haute et basse d'un contact 196.

Sur ces figures, l'actionneur est similaire à celui de la figure 1A, la charge étant un contact électrique 196.

Sur la figure 9A, les références 200 et 201 désignent respectivement une piste électrique d'entrée et une piste de sortie, la référence 202 une bande de masse.

Comme on le voit sur les figures 9B et 9C le système permet de commander la fermeture et l'ouverture d'un commutateur 196 En position basse celui-ci ferme le circuit entre les pistes 200 et 201 par exemple. Il peut aussi venir en contact avec une piste d'un circuit réalisé dans la couche 224, ce circuit n'étant pas représenté sur les figures.

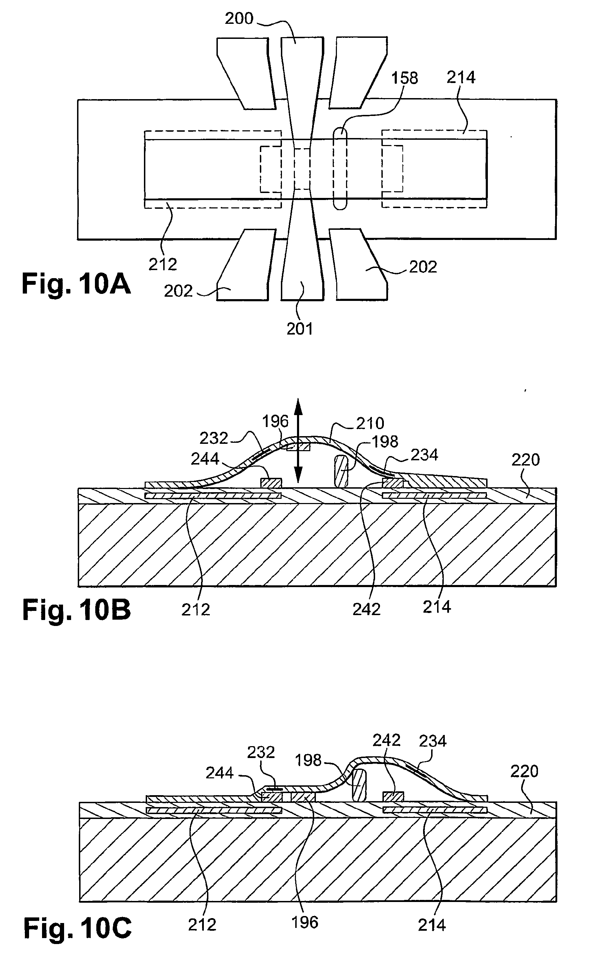

Les figures 10A - 10C représentent une réalisation d'un commutateur bistable, en vue de dessus (fig 10A) et de côté (10B et 10C, respectivement en position haute et basse).

Des références identiques à celles des figures 9 A - C y désignent des éléments similaires ou correspondants.

En outre des moyens magnétiques sont prévus : d'une part, des moyens fixes 242, 244 sur le substrat ou par rapport au substrat ; d'autre part la membrane mobile 210 est elle-même munie de moyens magnétiques : elle peut être au moins en partie magnétique, ou comporter des portions 232, 234 en matériau magnétique.

De préférence les moyens magnétiques 244 sont éloignés du contact 196 pour limiter les perturbations.

Dans les deux positions des figures 10B et 10C le système ne consomme pas d'énergie électrique, à la différence du système des figures 9B et 9C : ce sont en effet les moyens magnétiques qui assurent le maintien du système en positions haute et basse.

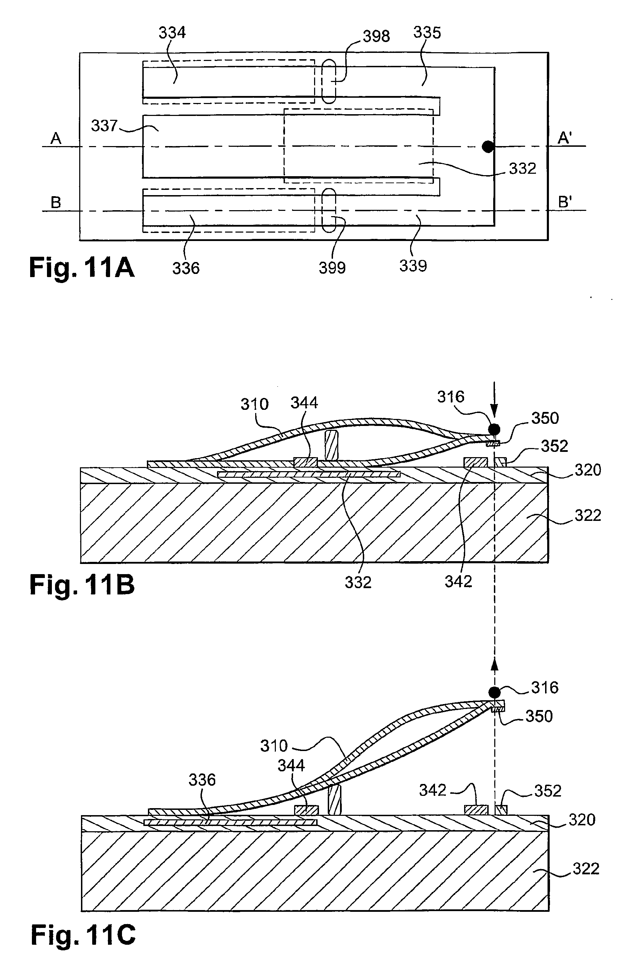

Un autre mode de réalisation va être décrit en liaison avec les figures 11A-11C.

En fait, ce mode réalisation correspond sensiblement à celui des figures 8A-8C, auquel sont rajoutés des moyens magnétiques, à la fois sur la partie fixe et sur, ou dans , la partie mobile 310. Par exemple des plots magnétiques ou des aimants 342,344 sont disposés sur la couche 320 qui repose elle-même sur un substrat 322, la poutre ou l'électrode mobile 310 comportant elle - même des moyens magnétiques. Par exemple elle contient une matière magnétique, par exemple du nitrure de fer (FeNi), localement ou sur toute sa longueur.

De préférence les moyens magnétiques ou le matériau magnétique incorporé dans l'électrode mobile 302 est encapsulé, afin de le protéger en cours d'utilisation.

Selon un exemple, l'électrode mobile est composée de trois couches superposées :
- une première couche en Si₃N₄,
- une deuxième couche en FeNi,
- une troisième couche en Si₃N₄.

Le dépôt d'une couche magnétique, de même que le dépôt des aimants 342, 344, peut se faire par exemple par électrodéposition ou par dépôt par pulvérisation cathodique.

La couche d'isolation (ex. : nitrure) peut aussi être discontinue pour diminuer les effets de charges.

Comme on le voit sur les figures 11B et 11C (respectivement vues en coupe le long des axes AA' et BB' de la figure 11A) le dispositif comporte en outre deux parties 350, 352 d'un contact électrique, qui est fermé lorsque l'extrémité de l'électrode mobile qui porte la charge 316 est en position basse.

La figure 11A est une vue de dessus de l'ensemble du dispositif. Par rapport à la figure 8A les positions relatives, d'une part de l'électrode fixe centrale 332 et d'autre part des électrodes fixes latérales 334, 336 sont inversées.

En outre, des plots ou pivots 398, 399 sont prévus sous chaque portion latérale 335,339 de l'électrode mobile, mais pas sous sa portion centrale 337.

Sur les figures 11B et 11C, seuls deux plots magnétiques, 342, 344 sont représentés. En fait, il est possible, comme illustré sur la figure 11A, que deux ou plusieurs aimants soient disposés sur le substrat, sous la partie centrale 337 de l'électrode mobile, et que deux ou plusieurs aimants soient disposés sur le substrat, sous chacune des parties latérales 334, 336 de cette électrode.

Ainsi peuvent être définies un ensemble de positions intermédiaires, stables, entre la position plus haute de la charge (figure 11C) et la position la plus basse, c'est-à-dire celle dans laquelle le contact électrique 350-352 est fermé. Ce mode de réalisation de la figure 11B permet donc aussi de former un condensateur à capacité variable, dont les moyens 350, 352 peuvent former les armatures, mais dans des positions stables. Une telle structure offre l'avantage de ne pas être sensible aux vibrations.

Sans les moyens magnétiques (donc avec une structure proche de celle des figures 8A - 8C à laquelle sont rajoutés les moyens 350, 352), on forme également une capacité variable, mais avec un fonctionnement continu : des moyens de mesure d'impédance permettent alors de mesurer la valeur de la capacité obtenue et d'ajuster, à l'aide des tensions appliquées aux électrodes, la distance relative des éléments de la capacité en fonction de cette mesure. Cependant de tels moyens de mesure induisent un bruit, qui se répercute sur le fonctionnement de la capacité. Le mode de réalisation des figures 11 A - C, avec des positions stables prédéfinies par les moyens magnétiques permet de s'affranchir de tels moyens de mesure d'impédance et donc du bruit que de tels moyens génèrent.

Dans un système tel que celui des figures 11A-11C ou 10A-10C, combinant des moyens électrostatiques et des moyens magnétiques, on choisira les dimensions des aimants et des électrodes de manière à obtenir une force d'attraction électrostatique, au moment de l'activation, supérieure à la force magnétique en jeu lors d'un contact entre la partie mobile et la partie fixe, elle-même supérieure à la force de rappel mécanique.

Par ailleurs, on cherchera à dimensionner les aimants et la surface d'électrodes de manière à avoir une différence suffisante entre la force électrostatique, ou de « zipping », et la force magnétique mise en oeuvre lors du contact. De préférence, cette différence est d'au moins 10 %, ce qui permet de ne pas être sensible à des inhomogénéités de fabrication de l'aimant, ni à des effets de striction (ou de collage) entre l'électrode mobile et le substrat, ni à des effets de charges dans les matériaux diélectriques.

Les forces électrostatiques, ou de « zipping », et les forces magnétiques en jeu lors du contact, sont, quant à elles, supérieures ou très supérieures, aux forces de rappel de la structure mécanique, de préférence dans un rapport au moins égal à 10.

Les mêmes considérations sont valables pour le mode de réalisation de la figure 5, lorsqu'il comporte des moyens magnétiques.

Diverses variantes peuvent être envisagées. En particulier, la partie mobile peut être enroulée ou tournée de façon à minimiser l'encombrement. Par ailleurs, cette partie mobile peut avoir un nombre de bras différents suivant l'application.

D'une manière générale, un procédé de réalisation d'un dispositif selon l'invention met en oeuvre les techniques de gravure de substrat et/ou de couches, et de dépôt de couches, techniques qui sont connues en microélectronique. De telles techniques sont décrites dans les documents 1 - 4 déjà cités.

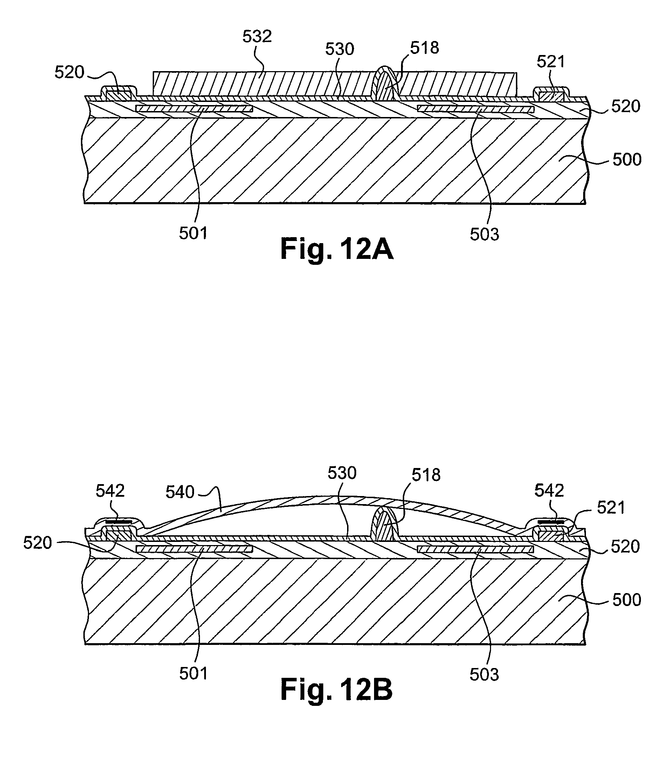

Les figures 12A - 12B illustrent des étapes de formation d'un dispositif selon l'invention, tel que celui de la figure 4B.

Sur un substrat 500 (figure 12A) est formée une couche isolante 520 et des électrodes 501, 503, ainsi que, éventuellement, des aimants 520, 521 par électrodéposition (par exemple de CO et Pt).

Un plot 518 peut être formé par dépôt d'une couche et gravure. Comme indiqué sur les figures 12A et 12B il peut être disposé de manière dissymétrique par rapport aux électrodes fixes 501, 503, permettant à un point de la partie centrale de la membrane, éventuellement à une charge disposée en ce point, d'avoir une amplitude supérieure à la hauteur du plot.

Une première couche sacrificielle très fine 530 (par exemple en polymère d'épaisseur 1,1 µm) est déposée, puis une seconde couche sacrificielle 532. On procède ensuite à la gravure, l'insolation, au développement de cette couche, et enfin à son fluage.

Il y a ensuite formation d'une couche mécanique 540 (par exemple en nitrure) et éventuellement d'une couche magnétique 542 (par exemple FeNi). La partie ou l'électrode mobile de l'actionneur peut être gravée dans cette couche mécanique 540. La couche sacrificielle est ensuite gravée, libérant ainsi la couche mécanique (figure 12B).

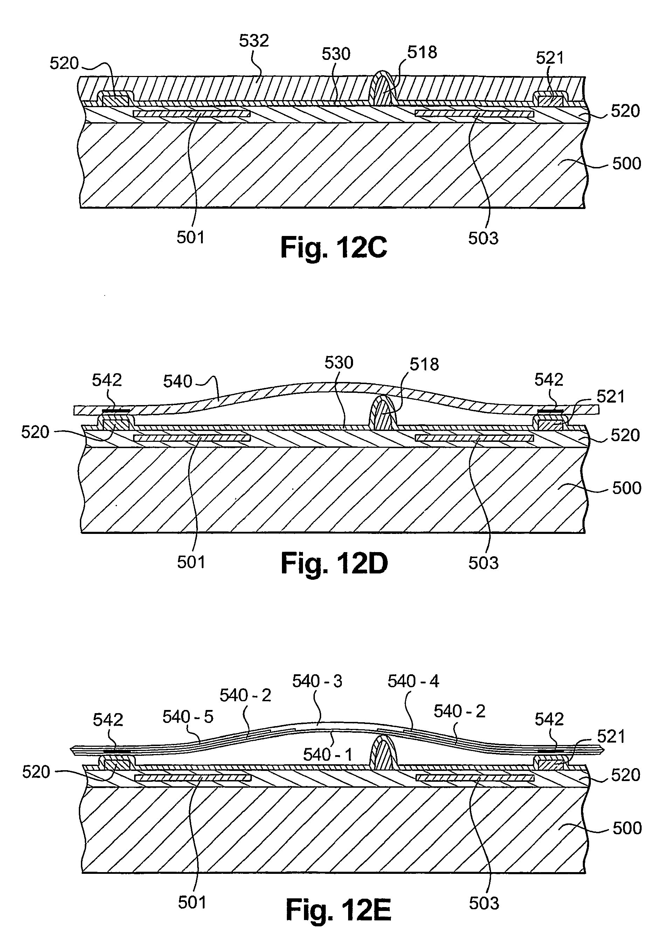

Selon une variante, illustré en figure 12 C - 12 D, la couche sacrificielle 532 s'étend au - delà des plots 520, 521. Il en résulte que la couche 540 a, après retrait de la couche sacrificielle, la forme illustrée en figure 12D, sans contact avec le substrat ou la couche 530 entre les plots 520, 521. Le maintien de la membrane 540 est assuré seulement par les moyens magnétiques 520, 521 d'une part, et 542 d'autre part.

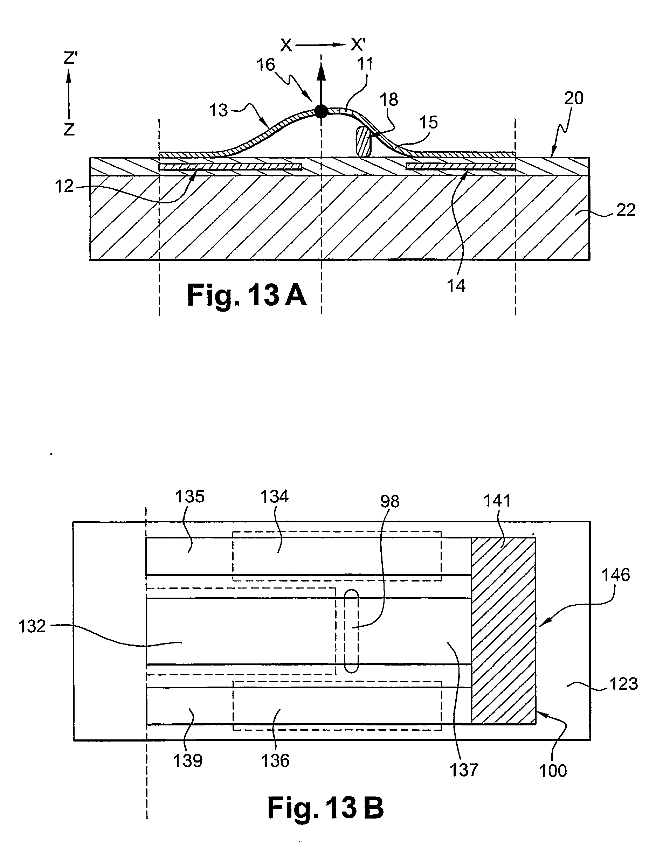

La membrane peut comporter par exemple une couche conductrice sur une couche isolante. Elle peut aussi comporter, comme illustré sur la figure 12E un tricouche : une couche isolante 540 - 1 (par exemple en nitrure Si3N4), une ou des couches d'électrodes 540 - 2, et une couche isolante 540 - 3 (par exemple aussi en nitrure Si3N4). Des conducteurs 540 - 4, 540 - 5 relient les zones conductrices à des moyens d'alimentation en tension (non représentés sur la figure). Cette variante permet de réaliser un dispositif actionneur comme illustré et expliqué plus loin en liaison avec les figures 13A - 14B.

Des variantes de ce procédé permettront d'adapter les formes de membrane et les dispositions des électrodes et des moyens magnétiques, par exemple pour réaliser des dispositifs tels que ceux des figures 6, 7, 8A -8 E, 9A - 11C. Il est également possible de réaliser un dispositif sans moyens magnétiques, comme déjà expliqué ci-dessus.

Dans les modes de réalisation exposés précédemment, l'électrode mobile comporte une partie souple qui peut être uniformément portée à un certain potentiel, et qui revient à sa configuration initiale par rappel par des forces mécaniques. Les différences de potentiel entre l'électrode mobile et chacune des électrodes fixes déterminent le mouvement de cette électrode souple, qu'elle soit du type illustré sur la figure 1A (deux électrodes fixes) ou 8A (avec trois électrodes fixes) ou qu'elle comporte plus de trois électrodes fixes. Sont appliquées autant de différences de potentiel qu'il y a de couples électrode fixe - électrode mobile.

L'invention concerne également le cas où la partie mobile ne serait plus uniformément conductrice mais comporterait au moins deux parties conductrices séparées par une portion isolante.

La figure 13A correspond au cas de la figure 1A, mais la partie souple présente une zone 11 isolante, séparant deux zones 13, 15 conductrices.

Ce dispositif fonctionne de la même manière que celui de la figure 1A, une différence de potentiel pouvant être appliquée à chacune des parties conductrices 13, 15 de la partie souple.

Comme dans le cas de la figure 1A, peuvent être appliquées autant de différences de potentiel (ici : deux) qu'il y a de couples électrode fixe - électrode mobile.

Dans cette variante, chacune des électrodes fixes permet de plaquer l'électrode mobile en face de laquelle elle est située, de manière progressive contre le substrat en fonction de la tension appliquée.

L'électrode mobile, dont une partie est plaquée sur le substrat, s'appuie alors sur le pivot, l'autre électrode mobile étant éloignée du substrat sous l'effet de forces mécaniques de rappel.

Cette action conjuguée des forces électrostatiques d'un côté, et de forces mécaniques de rappel de l'autre côté permet d'atteindre une amplitude importante, supérieure à la hauteur du pivot

La figure 13B correspond au cas de la figure 8A, mais les trois bandes parallèles 135, 137, 139 sont reliées par une partie 141 commune qui est isolante.

Ce dispositif fonctionne de la même manière que celui de la figure 8A, un potentiel peut être appliqué à chacune des parties conductrices 135, 137, 139 de la partie souple.

Comme dans le cas de la figure 8A, peuvent être appliquées autant de différences de potentiel (ici : trois) qu'il y a de couples électrode fixe - électrode mobile.

Dans ces deux exemples, ni le rôle du ou des pivot, ni celui de la charge ne sont modifiés par rapport à ce qui a été expliqué ci-dessus en relation avec les figures 1A et 8A. De même, les explications données en liaison avec les figures 8A - 8C concernant le jeu des forces électrostatiques et des forces mécaniques de rappel restent valables.

L'invention concerne également le cas où la partie mobile ne serait plus uniformément conductrice mais comporterait au moins deux parties conductrices séparées par une portion isolante, et où les électrodes fixes seraient remplacées par une seule électrode fixe.

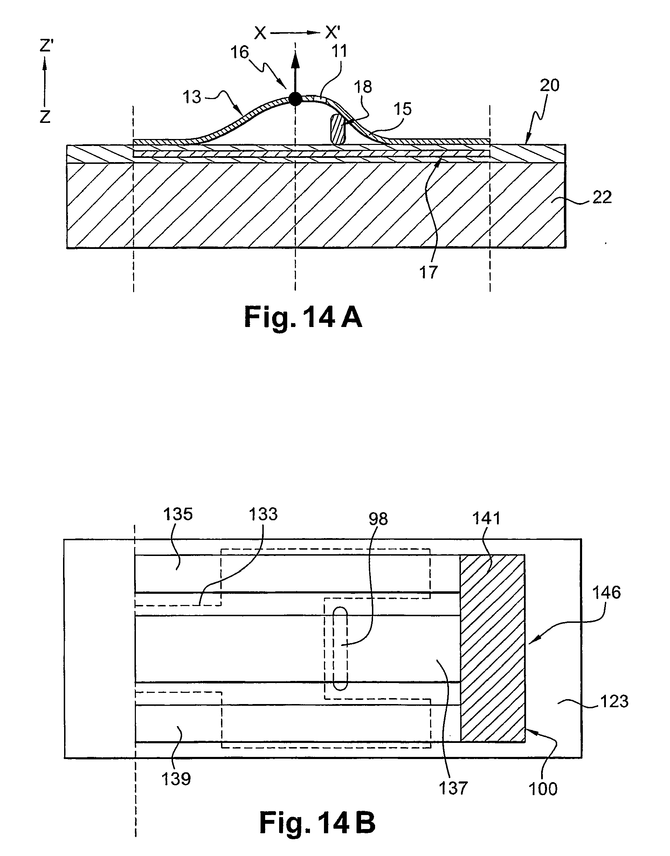

La figure 14A correspond au cas de la figure 1A, mais la partie souple présente une zone 11 isolante, séparant deux zones 13, 15 conductrices. En outre, une seule électrode fixe 17 est réalisée dans ou sur la couche 20 ou 22.

Ce dispositif fonctionne de la même manière que celui de la figure 1A, un potentiel pouvant être appliqué de manière indépendante à chacune des parties conductrices 13, 15 de la partie souple.

Comme dans le cas de la figure 1A, peuvent être appliquées autant de différences de potentiel (ici : deux) qu'il y a de couples électrode fixe - électrode mobile.

La figure 14B correspond au cas de la figure 8A, mais les trois bandes parallèles 135, 137, 139 sont reliées par une partie 141 commune qui est isolante. En outre, une seule électrode fixe 133 est réalisée dans ou sur la couche 120 ou 123.

Ce dispositif fonctionne de la même manière que celui de la figure 8A, un potentiel peut être étant appliqué à chacune des parties conductrices 135, 137, 139 de la partie souple.

Comme dans le cas de la figure 8A, peuvent être appliquées autant de différences de potentiel (ici : trois) qu'il y a de couples électrode fixe - électrode mobile.

Dans ces deux autres exemples, ni le rôle du ou des pivot, ni celui de la charge ne sont modifiés par rapport à ce qui a été expliqué ci-dessus en relation avec les figures 1A et 8A.

De même, les explications données en liaison avec les figures 1A - 1B et 8A - 8C concernant le jeu des forces électrostatiques et des forces mécaniques de rappel restent valables.

Dans les exemples des figures 13 A - 14B, on peut appliquer autant de différences de potentiel qu'il y a de couples électrode fixe - électrode mobile.

Le principe exposé ci - dessus en liaison avec les figures 13A - 14B peut être appliqué à tous les autres modes de réalisation déjà décrit ci-dessus : par rapport à ces modes de réalisation, on peut configurer les électrodes mobiles et les électrodes fixes en conservant le même nombre de différences de potentiel à appliquer, égal au nombre de couples électrode fixe - électrode mobile.

En particulier un dispositif tel qu'illustré en figures 13A et 14A peut être appliqué à un système tel qu'illustré sur la figure 3, les actionneurs 41, 43, 45 ayant la forme illustrée sur les figures 13A ou 14A.

De même, les extrémités des actionneurs des figures 13A, 14A peuvent être fixées par rapport au substrat comme expliqué en liaison avec les figures 4A et 4B.

En ce qui concerne les modes de réalisation des figures 13B et 14B, les extrémités de chaque bande (du côté opposé à la zone isolante 141) sont maintenues fixes par rapport au substrat 123, soit par tension électrostatique, soit par fixation ou encastrement, soit par moyens magnétiques, ces différentes variantes ayant déjà été décrites ci-dessus, notamment en liaison avec les figures 4A et 4B.

Les dispositifs des figures 13A et 14A s'appliquent à la réalisation de commutateurs électriques, comme sur les figures 9A - 9C, ou de commutateurs bistables, comme sur les figures 10A - 10C.

Aux dispositifs des figures 13B et 14B s'appliquent également les variantes des figures 8D, ou 8E, ou encore 11A (deux pivots latéraux, pas de pivot central). Ces dispositifs des figures 13B et 14B s'appliquent également à la réalisation de commutateurs comme sur les figures 11B, 11C.

Des charges telles que les charges 16, 146, 316 peuvent également être appliquées aux dispositifs des figures 13A - 14B.

Dans tous les modes de réalisation expliqués ci-dessus, en liaison avec les figures 1A - 14B, on peut appliquer autant de différences de potentiel qu'il y a de couples électrode fixe - électrode mobile.

L'électrode mobile ou la membrane mobile peut s'appuyer sur le pivot lorsqu'une des électrodes fixes attire l'électrode mobile ou la partie de l'électrode mobile en face de laquelle cette électrode fixe est située, l'autre partie de l'électrode mobile pouvant s'éloigner du substrat sous l'effet de forces mécaniques de rappel.

Un actionneur selon l'invention met donc en jeu deux types de forces, de natures différentes : des forces électrostatiques, lors de l'attraction d'une portion de la partie mobile vers le substrat, et des forces de rappel mécaniques, lorsque cette attraction électrostatique est relâchée.

Une électrode mobile, ou une membrane mobile d'un actionneur selon l'invention possède donc une souplesse qui lui permet d'être plaquée progressivement, en fonction de la tension, sur la partie fixe du dispositif, et une raideur, ou encore des caractéristiques combinées de forme et/ou de dimensions et/ou de nature de matériau qui lui permettent de revenir en position initiale, non plaquée sur le substrat, lorsque la tension électrostatique est relâchée.

Comme déjà indiqué ci-dessus, cet effet conjugué de forces électrostatiques et de forces mécaniques, de natures différentes, permet une amplitude du mouvement de la partie mobile supérieure à la hauteur des moyens formant pivot.

Un procédé de fonctionnement d'un actionneur selon l'invention comporte donc les étapes suivantes :
- application, de préférence progressive, d'une tension entre une partie de l'électrode mobile ou de la membrane mobile et une électrode fixe,
- éventuellement, relâchement d'une tension appliquée antérieurement entre l'autre partie de l'électrode mobile ou de la membrane mobile et une électrode fixe.

L'invention s'applique au cas de micro-miroirs ou de micro - lentilles actionnables électriquement en rotation.

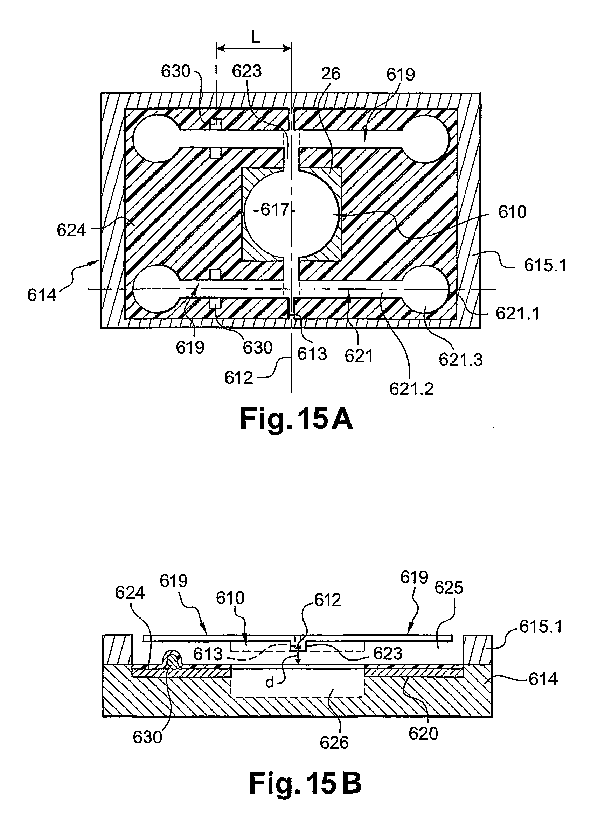

Un premier exemple de micro-miroir ou de micro-lentille selon l'invention est illustré sur les figures 15A et 15B.

Le micro-miroir ou la micro-lentille comporte une partie mobile 610 et une partie fixe 614. La partie mobile 610 prend globalement la forme d'un plateau (pour un micro-miroir) ou d'un cadre (pour une micro-lentille). Elle est destinée à être déplacée en rotation autour d'un axe 612. L'axe passe par la partie mobile 610 et est sensiblement parallèle à un plan principal de la partie mobile 610. Des moyens de liaison 613 de la partie mobile 610 à la partie fixe 614 matérialisent cet axe 612. Ces moyens de liaison peuvent prendre la forme de deux bras torsion 613 issus de la partie mobile 610 et qui ont une extrémité solidaire (par exemple par encastrement) de la partie fixe 614.

Les deux bras de torsion 613 sont dans le prolongement l'un de l'autre.

La partie mobile 610 est ainsi suspendue au-dessus de la partie fixe 614.

La partie mobile 610 comporte des faces principales dont une est tournée vers la partie fixe 614 et dont l'autre est dotée d'une zone réfléchissante 617 (hachurée) destinée à réfléchir de la lumière dans le cas d'un micro-miroir. La zone réfléchissante 617 est représentée comme n'occupant que partiellement la face de la partie mobile 610 mais elle pourrait l'occuper totalement.

Dans le cas d'une micro-lentille, la zone 617 représente une zone réfringente, il peut s'agir d'une pièce réfringente lenticulaire fixée, par exemple par collage, au cadre 610. L'axe 612 peut passer par le centre géométrique de la partie mobile 610.

Le micro-miroir ou la micro-lentille comporte également des moyens de commande électrique du déplacement en rotation de la partie mobile 610.

Ces moyens comportent dans l'exemple de la figure 15A deux actionneurs 619 à « effet zipping » et des moyens d'adressage (non visibles sur les figures 15A et 15B) de ces actionneurs.

Par actionneur 619 à « effet zipping », on entend, comme précédemment :
- soit un actionneur formé de deux couples d'électrodes 620, 621, avec deux électrodes fixes 620 (figure 15B) et une électrode mobile 621 ayant une extrémité libre 621.1, l'électrode mobile 621 étant destinée à venir se plaquer sur l'électrode fixe 620 depuis son extrémité libre 621.1, le plaquage se faisant sur une surface variable en fonction d'une tension appliquée entre les deux électrodes ;
- soit, pour chaque actionneur ou pour l'un des actionneurs, et comme expliqué ci-dessus en liaison avec les figures 13A - 14B, deux électrodes dans la partie mobile dudit actionneur ou de chaque actionneur, séparées par une zone isolante, et une seule ou deux électrodes fixes (comme par exemple sur les schémas des figures 13A et 14A).

Lorsque les tensions sont relâchées entre parties mobile et fixe, la partie correspondante de l'actionneur revient en position initiale, à distance du substrat, sous l'effet des forces de rappel mécanique.

Il est possible de combiner les deux types d'actionneurs dans un même dispositif :
- les deux actionneurs 619 étant chacun du type à deux électrodes mobiles isolées l'une par rapport à l'autre, mais l'un étant positionné en face d'une électrode fixe, et l'autre en face de deux électrodes fixes,
- ou bien l'un des actionneurs 619 étant du type à deux électrodes mobiles isolées l'une par rapport à l'autre, mais étant positionné en face d'une électrode fixe ou de deux électrodes fixes, tandis que l'autre actionneurs 619 étant du type à une seule électrode mobile, positionné en face de deux électrodes fixes.

Dans tous les cas, l'électrode mobile 621 ou l'actionneur 619, est flexible ou souple comme dans les exemples déjà décrits ci-dessus, et fonctionne comme déjà expliqué ci-dessus.

Chaque électrode fixe 620 est solidaire de la partie fixe 614 (figure 15B). Chaque actionneur 619 est solidaire d'un des deux bras d'entraînement 623 qui est issu de la partie mobile 610 et qui est dirigé selon l'axe de rotation 612. Ce bras d'entraînement 623 est suffisamment rigide, mais peut cependant être entraîné en rotation autour de l'axe 612.

Les actionneurs 619 peuvent être adressés ou actionnés soit séparément ou soit simultanément comme on le verra ultérieurement.

La partie mobile 610 peut avoir une envergure comprise entre 100 µm ou quelques centaines de micromètres et quelques millimètres ou 5 mm, et une épaisseur d'environ quelques dizaines de micromètres, ou comprise entre 10µm et 100 µm. Les dimensions indiquées ne sont bien entendu pas limitatives.

La partie mobile possède de préférence une rigidité suffisante pour que la zone réfléchissante ou réfringente 617 qu'elle porte reste la plus plane possible, de manière à conserver sa qualité optique quelles que soient les conditions, et notamment lors d'accélérations.

L'électrode mobile 621, ou la partie mobile de l'actionneur 619, peut prendre la forme, depuis le bras d'entraînement 623, d'un corps 621.2 sensiblement rectiligne de largeur sensiblement constante se terminant au niveau de son extrémité libre 621.1 par une partie d'extrémité 621.3 qui peut être de même largeur que le corps 621.2 ou, de manière avantageuse, qui peut être plus large (comme illustré sur la figure 15A). Dans ce dernier cas la partie d'extrémité 621.3 peut être qualifiée d'amorce.

Sur la figure 15A, les deux actionneurs 619 sont répartis de part et d'autre du composant optique 610, et les deux corps 621.2 sont sensiblement parallèles entre eux ou s'étendent suivant deux directions sensiblement parallèles entre elles. Cependant d'autres formes peuvent être réalisées.

Quant à l'électrode fixe 620, elle peut avoir une forme quelconque dans la mesure où l'électrode mobile 621 peut se plaquer sur elle ou sur la couche diélectrique 624 qui la recouvre. Comme rappelé ci-dessus, il peut y avoir plusieurs électrodes fixes dans certains modes de réalisation, notamment ceux mettant en oeuvre les principes des dispositifs des figures 1A et 13A déjà commentées ci-dessus.

L'électrode fixe peut donc être unique pour toutes les électrodes mobiles ou bien comporter deux ou trois ou quatre zones conductrices isolées entre elles, formant ainsi, respectivement, deux ou trois ou quatre électrodes fixes pour les électrodes mobiles.

Une amorce 621.3 plus large que le corps 621.2 permet de réduire la tension ou le seuil d'attraction Vc ainsi que la tension seuil de décollement Vd de l'électrode mobile correspondante.

Lorsqu'un actionneur 619 est au repos, il n'est soumis à aucune tension d'actionnement, ses deux parties mobiles étant ramenées dans une position hors contact avec le substrat du fait des forces de rappel mécaniques. Les électrodes mobile(s) et fixe(s) 620, 621 sont alors séparées par un espace 625 qui peut être plein d'un gaz (air ou autre) ou qui peut être vide. Cet espace inter-électrode 625 est illustré sur la figure 15B. Il peut être délimité par le cadre 615.1. Il est préférable de placer dans cet espace 625 une couche de matériau diélectrique 624 interposée entre les électrodes fixes 620 et les électrodes mobiles 621 pour éviter un court-circuit lorsqu'une électrode mobile 621 vient en contact avec une électrode fixe 620.

Cette couche diélectrique 624 est visible sur la figure 15B, elle y recouvre les électrodes fixes 620. L'épaisseur de la couche diélectrique 624 peut être comprise entre une valeur minimale et une valeur maximale, la valeur minimale pouvant être déterminée par le claquage de l'isolant soumis à un champ électrique généré par une tension d'actionnement donnée, appliquée entre les deux électrodes d'un actionneur, la valeur maximale pouvant être déterminée par la distance maximale selon laquelle les deux électrodes d'un actionneur peuvent se trouver lorsque la partie mobile 610 est dans la position de repos sans que la force d'attraction ne soit trop faible pour une tension d'actionnement donnée. Par exemple pour une tension d'actionnement de 100V, l'épaisseur minimale de la couche diélectrique 624 (réalisée par exemple en oxyde ou en nitrure d'un matériau semi-conducteur, le silicium par exemple) peut être d'environ 0,2 micromètre.

A titre indicatif, l'électrode mobile 621 peut avoir :
- une longueur comprise entre quelques dizaines de micromètres et quelques millimètres, par exemple entre 10 µm ou 20 µm et 1 mm ou 5 mm ou 10 mm,
- une épaisseur comprise entre quelques dixièmes de micromètres et quelques micromètres, par exemple entre 0,1 µm et 10 µm ; l'épaisseur rend l'électrode mobile 621 suffisamment souple ou flexible dans une direction sensiblement perpendiculaire au plan principal de la base 614 ;
- et une largeur de corps 621.2 très supérieure à son épaisseur, par exemple une épaisseur comprise entre 50 µm et 100 µm. Au repos, l'espace 625 inter-électrode peut être d'environ quelques micromètres à quelques dizaines de micromètres.

Il est avantageux que la partie fixe 614 comporte, en regard de la partie mobile 610, un évidement 626 (figure 15B). La partie mobile 610 est susceptible de pénétrer dans l'évidement 626 lorsqu'elle prend une position inclinée avec un angle important. La prise d'une position inclinée avec un tel angle d'inclinaison ne serait pas possible en l'absence de l'évidement 626 car la partie mobile 610 heurterait la partie fixe.

Les électrodes fixes 620 sont de préférence situées sur la partie fixe à l'extérieur de l'évidement 626, de manière à conserver l'espace inter-électrode 625 relativement faible lorsque les actionneurs sont en position de repos.

La profondeur de l'évidement 626 est choisie suffisante pour que la partie mobile puisse s'incliner d'un angle θmax sans heurter la partie fixe 614. L'angle θmax correspond à l'angle maximum pris par la partie mobile lorsque les moyens d'adressage délivrent une tension d'actionnement maximale.

L'évidement 626 peut être un trou traversant la partie fixe 614 ou seulement un trou borgne dans cette partie fixe 614.

S'il s'agit d'un trou traversant, il peut être réalisé à partir de la face de la partie fixe 614 destinée à recevoir les électrodes fixes 620, (cette face est dite face avant) ou à partir de l'autre face, qui est dite face arrière.

Cet évidement 626 sera réalisé par une gravure sèche ou, de préférence, par une gravure humide, dans le matériau de la partie fixe 614 qui est généralement un matériau semi-conducteur.

Dans cette configuration, les bras d'entraînement 623 sont prolongés par les bras de torsion 613 comme sur la figure 15A.

Les actionneurs 619 peuvent être situés de part et d'autre de la partie mobile 610, comme illustré sur la figure 15A.

Mais ce n'est pas une obligation et il est aussi possible d'avoir seulement un actionneur 619 sur un côté du support de composant optique 610.

En se référant à la figure 15A, on pourrait n'avoir qu'un seul des deux actionneurs représentés, par exemple celui qui est vu dans la coupe de la figure 15B.

En pratique, un bras de torsion 613 a une section transversale inférieure à celle d'un bras d'entraînement 623, cette section transversale lui conférant une certaine souplesse en torsion. Le bras d'entraînement 623 a une section transversale plus importante pour rester rigide lors de l'entraînement.

Ainsi le dimensionnement des bras de torsion 613 peut être optimisé de manière à ce qu'ils soient suffisamment souples en torsion et suffisamment raides en flexion verticale. Ils sont de manière avantageuse relativement épais et leur largeur sera inférieure à leur épaisseur.

Si le bras de torsion 613 n'est pas suffisamment rigide en flexion verticale, l'actionneur 619 peut avoir tendance à tirer la partie mobile 610 vers le bas plutôt qu'à l'entraîner en rotation. Le mouvement de la partie mobile 610 risque alors de ne pas être une pure rotation, ce qui peut donner un mouvement de translation latérale à un faisceau lumineux réfléchi ou transmis résultant d'un faisceau lumineux incident sur la zone réfléchissante ou réfringente 17. Cet effet de translation additionnelle peut aussi être recherché et, dans ce cas, le fait que le bras de torsion 613 ne soit pas suffisamment rigide en flexion verticale présente plutôt un intérêt.

Au moins l'un des actionneurs 619 comporte des moyens 630 formant un pivot pour son électrode mobile ou ses électrodes mobile 621.

Ces moyens 630 vont faire pivot dans une zone placée entre une zone de l'actionneur reliée au bras d'entraînement 623 et une extrémité libre 621.1 de l'actionneur.

Les moyens 630 formant pivot peuvent être formés par au moins un plot fixe par rapport à la partie fixe 614, de la même manière que ce qui a été expliqué ci-dessus en liaison avec, par exemple, les figures 1A, 1B ou 4A, 4B. Chaque plot se projette alors de la partie fixe 614 vers la partie mobile 621.

A l'inverse, un des plots 630 peut être solidaire de l'électrode mobile 621 et se projeter vers la partie fixe 614.

Pour l'actionneur muni d'un plot, ce dernier forme une zone d'appui pour l'électrode mobile 621, lorsque celle-ci est attirée par l'électrode fixe 620.

En variante, les moyens 630 formant pivot peuvent être formés d'au moins un bras latéral à l'électrode mobile 621, reliant l'électrode mobile 621 à la partie fixe 614. Le bras 630 peut être comme décrit ci-dessus en liaison avec la figure 2A, ou être issu de l'électrode mobile et avoir une extrémité fixée à la partie fixe 614, par exemple par encastrement.

Deux bras, disposés de part et d'autre de l'électrode mobile, rendent la structure symétrique. Une meilleure stabilité latérale des électrodes mobiles est alors obtenue.

Comme déjà décrit ci-dessus en liaison avec les figures 1A - 14B, les moyens 630 formant pivot permettent de maintenir à distance une zone ou une portion de l'électrode mobile 621 par rapport à la partie fixe 614 lorsque l'extrémité libre de l'électrode mobile 621 est attirée par l'électrode fixe 620.

La distance L entre la zone où se trouve un pivot de l'électrode mobile et la portion de cette électrode mobile ou de ces moyens actionneurs reliée au bras d'entraînement 623 assure un rôle de levier qui permet d'obtenir une inclinaison de la partie mobile 610. Le bord de la partie mobile 610, se trouvant du même côté de l'axe 612 que l'électrode mobile ou l'actionneur 621 qui vient se plaquer sur l'électrode fixe 620, se soulève, et le bord opposé s'abaisse.

Avec une telle configuration, la distance d entre l'axe de rotation 612 et la partie fixe 614 au niveau de la surface de plaquage peut être de l'ordre de quelques micromètres, par exemple d est comprise entre 3 µm et 10 µm.

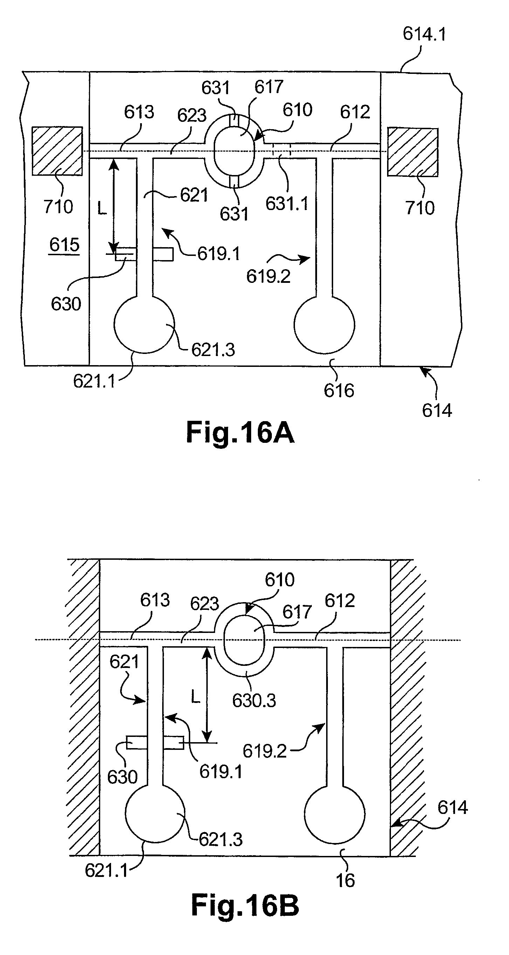

Il est possible de réaliser un dispositif ayant un actionneur avec des moyens 630 formant pivot, comme illustré sur la figure 16A. L'actionneur présente alors deux parties 619 - 1 et 619 - 2 séparées par une portion isolante 631, et peut être situé en face de une ou de deux électrodes fixes (sur le principe de ce qui a été décrit ci-dessus en liaison avec les figures 13A et 14A).

En fait cette partie isolante peut être insérée, comme illustré sur la figure 16A, dans des moyens formant support d'un composant optique 617. Ils pourraient être aussi situés comme illustré en 631 - 1, de manière décalée par rapport à ces moyens formant support ***(exact* ?).**

Sur la figure 16B, la partie mobile ne comporte pas de partie isolante : il s'agit alors d'une seule électrode mobile, située en face de deux électrodes fixes, comme expliqué ci-dessus en liaison avec par exemple la figure 1A (les électrodes fixes sont non visibles sur la figure 16B mais sont contenues dans le substrat ou la partie fixe 614).

Dans les cas illustrés sur ces deux figures 16A et 16B, la partie mobile (comportant donc les deux parties 619 - 1, 619 - 2 et les deux portions du bras 623 situées de part et d'autre des moyens 610 de support du composant optique) est située d'un seul côté de l'axe 612.

Cette configuration a l'avantage de positionner les moyens mobiles 610, formant support du composant optique 617, à proximité d'un bord 614.1 de la partie fixe 614. La structure obtenue est plus compacte que dans les modes de réalisation décrits précédemment en liaison avec les figures 15A et 15B. Une telle structure est particulièrement intéressante lors de l'intégration d'un composant 617 tel qu'un micro-miroir ou une micro-lentille dans un système optique.

Le dispositif des figures 16A et 16B comporte également des moyens 630 formant pivot, pouvant avoir l'une des formes déjà décrites ci-dessus en liaison avec l'un quelconque des modes de réalisation.

Un autre avantage des configurations des figures 16A et 16B est que la partie mobile 610 peut tourner dans les deux sens par rapport à une position de repos obtenue quand aucun des actionneurs 619 n'est activé.

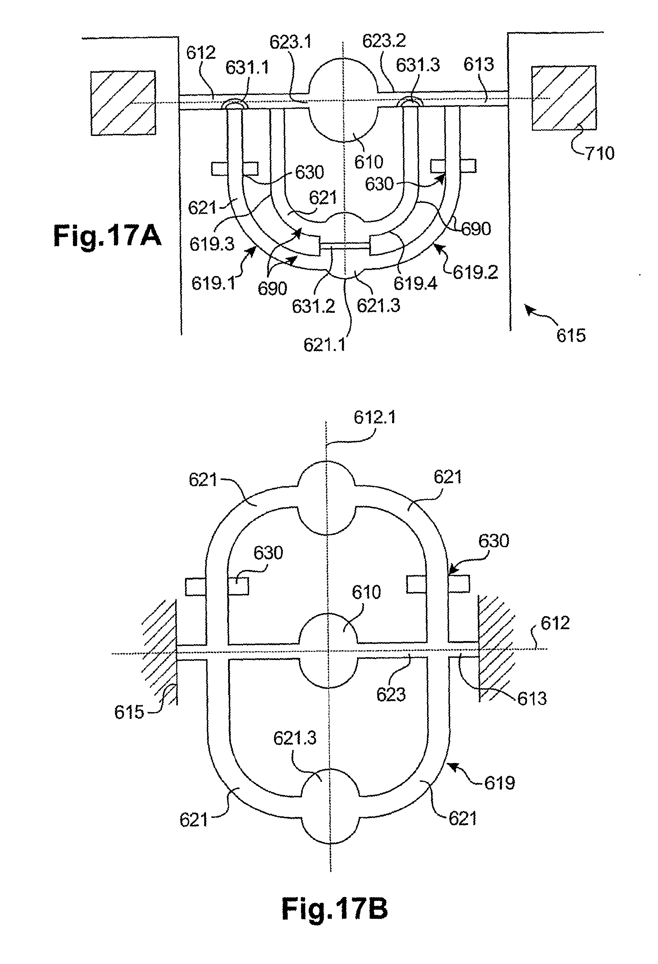

Les figures 17A, 17B illustrent d'autres configurations d'un dispositif optique conforme à l'invention.

Sur la figure 17A, on a représenté deux actionneurs 619.1, 619.3 d'une part et 619.2, 619.4 d'autre part, situés d'un même côté de l'axe 612.

Chaque actionneur comporte deux parties repliées de manière à ce que les deux extrémités libres correspondantes soient reliées à un même côté des moyens mobiles 610. Chaque actionneur coopère ainsi avec un bras d'entraînement 623.1, 623.2 situé d'un côté de la partie mobile 610.

Une partie de chaque actionneur comporte des moyens 630 formant pivot.

Les extrémités libres 621.1 et 621.3 des électrodes mobiles de ces deux actionneurs peuvent être mécaniquement communes, comme illustré sur la figure 17A. Les amorces 621.3 de ces électrodes mobiles peuvent même être solidaires.

Dans chaque actionneur, l'un des bras actionneurs 619.1, 619.2 est pourvu de moyens formant pivot 630 et l'autre bras 619.3, 619.4 en est dépourvu.

Chaque actionneur fonctionne donc sur le principe de ce qui a été expliqué ci-dessus en liaison avec les figures 1A - 16B : l'une des parties peut être attirée vers le substrat par effet électrostatique, tandis que l'autre partie subit un rappel mécanique qui l'éloigne du substrat.

Les références 710 visibles sur la figure 17A (et également 16A) illustrent des plots de contact portés par le cadre (ou les montants) 615 ; ces plots sont destinés à l'alimentation des électrodes mobiles des actionneurs.

L'un et/ou l'autre des actionneurs peut comporter une ou deux électrodes mobiles (comme expliqué ci-dessus en liaison avec les figures 1A, 13A, 14A), et un nombre d'électrodes fixes de sorte que l'actionneur puisse être commandé par deux tensions différentes.

Sur la figure 17A, chaque actionneur est en fait constitué de deux parties formant chacune une électrode mobile, ces deux parties étant séparées d'une zone électriquement isolante 631.2. En fait, compte tenu du lien mécanique entre les extrémités libres des deux actionneurs, une seule portion isolante 631.2 suffit pour les deux actionneurs.

Comme déjà indiqué ci-dessus, les deux actionneurs ont leurs autres extrémités reliées aux bras d'entraînement 623.1 et 623.2. Chaque bras d'entraînement est doté d'une zone électriquement isolante 631.1 et 631.3 à cet effet.

Dans la configuration de la figure 17A un axe perpendiculaire à l'axe de rotation 612 passant par le centre de la partie mobile est un axe de symétrie pour les deux actionneurs.

La configuration de la figure 17B comporte également deux actionneurs, répartis d'un côté et de l'autre d'un axe 612.1 perpendiculaire à l'axe 612. Les parties mobiles 621 des actionneurs, qui sont situées d'un même côté de l'axe 612 se terminent par une amorce commune 621.3. Des moyens 630 formant pivot sont associés à chaque actionneur. L'actionnement non simultané des deux actionneurs peut entraîner la partie mobile 610 en rotation, mais un actionnement simultané des deux actionneurs entraîne la partie mobile 610 en translation vers le haut, elle va alors s'éloigner de la partie fixe 614.

Dans le cas des figures 17A et 17B, les actionneurs ont une forme courbe, permettant d'établir un lien mécanique entre eux.

On va maintenant décrire un exemple de procédé de réalisation d'un dispositif (par exemple micro-miroir ou micro-lentille) selon l'invention. On suppose que les moyens d'adressage appliquent des tensions appropriées sur les électrodes mobiles des actionneurs pour déplacer en rotation la partie mobile tandis que les électrodes fixes sont portées à une tension constante (généralement la masse). Mais d'autres schémas d'affectation des tensions pourraient être envisagés.

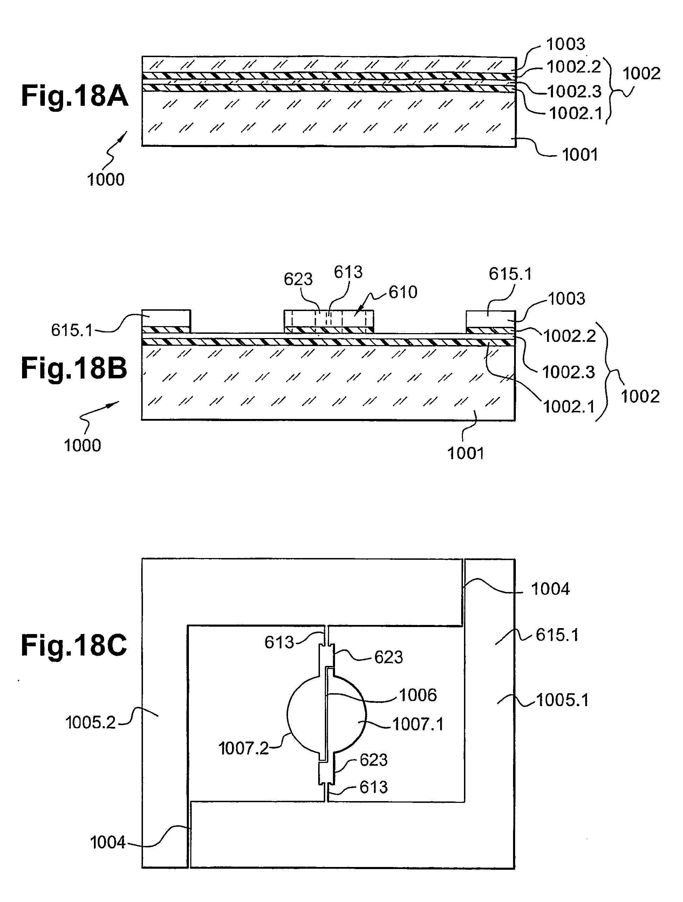

On se réfère aux figures 18A à 18L. On suppose que les substrats semi-conducteurs sont conducteurs.

On utilise un premier substrat 1000 formé d'une couche de base 1001 en matériau semi-conducteur, par exemple en silicium, recouverte d'un sandwich 1002 formé par deux couches isolantes 1002.1, 1002.2 (par exemple en oxyde de silicium) situées de part et d'autre d'une couche intermédiaire 1002.3 en matériau semi-conducteur (par exemple en silicium), le sandwich 1002 étant lui-même recouvert par une couche superficielle 1003 en matériau semi-conducteur (par exemple en silicium).

Ce substrat est illustré sur la figure 18A. La couche isolante référencée 1002.1 est la couche inférieure du sandwich et la couche 1002.2 est la couche supérieure du sandwich.

Un tel substrat 1000 peut être un double substrat SOI (pour Silicon on Insulator abréviation anglo-saxonne de silicium sur isolant). La couche superficielle 1003 est plus épaisse que la couche intermédiaire 1002.3. Les couches en matériau semi-conducteur 1001, 1002.3, 1003 sont conductrices.

On suppose que dans cet exemple, le micro-miroir ou la micro-lentille est similaire à celui des figures 15A, 15B, les bras d'entraînement 623 et de torsion 613 étant bout à bout.

On commence par délimiter par une étape de photolithographie le motif d'une première région de la partie fixe 614 à savoir le cadre 615.1 ou les montants, d'une première région de la partie mobile 610, d'une première région des bras de torsion 613 et d'entraînement 623. On grave ensuite ces différents éléments dans la couche superficielle 1003 et dans la couche isolante supérieure 1002.2 (figure 18B). Cette étape de gravure peut être une étape de gravure sèche. Les premières régions sont donc formées du matériau semi-conducteur de la couche superficielle 1003 et du matériau de la couche isolante 1002.2 supérieure.

La partie mobile 610 peut rester pleine ou être gravée, par exemple de manière à obtenir un cadre avec un évidemment central, suivant que, par exemple, on réalise un micro-miroir ou une micro-lentille. Une gravure en cadre est esquissée en pointillés sur la figure 18B.

Les électrodes mobiles des actionneurs seront réalisées ultérieurement dans la couche intermédiaire 1002.3.

Les bras de torsion 613, le cadre 615 et la partie mobile 610 vont permettre d'acheminer les signaux d'adressage aux électrodes mobiles des actionneurs. Ces signaux d'adressage se propagent dans le cadre et les bras de torsion depuis des plots de contact portés par le cadre et qui seront réalisés ultérieurement.

Un des bras de torsion va par exemple servir pour l'adressage des actionneurs situés d'un côté de l'axe 612 et l'autre bras de torsion pour l'adressage des actionneurs situés de l'autre côté de l'axe 612.

Pour que les signaux d'adressage destinés aux électrodes mobiles situées d'un côté de l'axe 612 ne se propagent pas aux électrodes mobiles situées de l'autre côté de l'axe qui, elles, doivent recevoir d'autres signaux d'adressage, on peut réaliser, dans la couche superficielle 1003, et aussi dans la couche isolante supérieure 1002.2 (figure 18C), des tranchées d'isolation 1004 au niveau du cadre 615.1 et une tranchée d'isolation 1006 au niveau de la première région de la partie mobile 610. Ces tranchées peuvent être des tranchées d'air ou être ultérieurement emplies de matériau diélectrique.

Si, au lieu d'avoir un cadre, on prévoit deux montants, ces derniers sont électriquement isolés de par leur configuration.

Les tranchées d'isolation 1004 découpent le cadre 615.1 en deux parties 1005.1, 1005.2, l'une 1005.1 portant un des plots de contact transmettant un des signaux d'adressage et l'autre partie 1005.2 portant l'autre plot de contact transmettant l'autre signal d'adressage. Les plots ne sont pas visibles à cette étape (figure 18C).

De la même manière, la couche superficielle 1003 correspondant à la première région de la partie mobile 610 est séparée en deux parties 1007.1, 1007.2 par la tranchée d'isolation 1006.

L'un des bras de torsion est issu de l'une des parties 1007.1 et l'autre de l'autre partie 1007.2. La tranchée d'isolation 1006 est dirigée principalement selon l'axe de rotation 612. La tranchée d'isolation 1006 est visible sur la figure 18C.

Dans un second substrat semi-conducteur 1200 (par exemple en silicium) qui va servir de seconde région de la partie fixe 614, à savoir la base 616, on réalise par gravure une première partie en retrait 1201 qui va contribuer à former l'espace 625 entre électrodes fixe et mobile des actionneurs et éventuellement une seconde partie en retrait 1202 qui va former l'évidement 626 devant se trouver sous la partie mobile 610. La première partie 1201 en retrait est moins profonde que la seconde partie en retrait 1202. La profondeur de la première partie en retrait 1201 peut être de l'ordre de quelques micromètres, comme on l'a vu précédemment, du fait qu'au moins un actionneur comporte des moyens formant pivot.

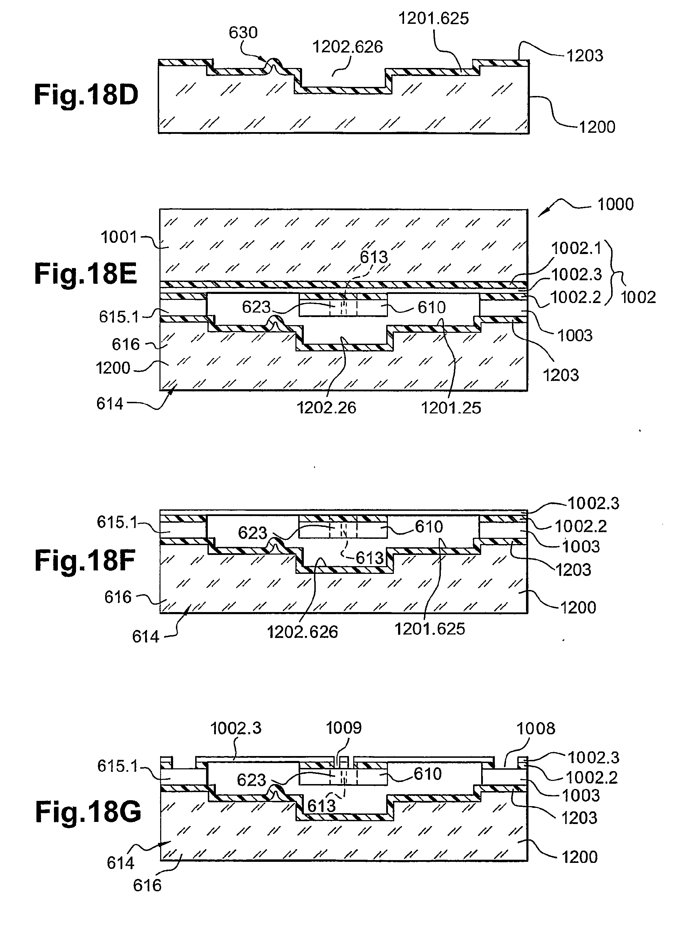

Les moyens 630 formant pivot de type plot 630.1 peuvent être réalisés par gravure sèche par exemple lors de la gravure de la première partie en retrait, comme illustré sur la figure 18D. Le plot est réalisé, comme les électrodes fixes, dans le matériau semi-conducteur du second substrat 1200.

La seconde partie en retrait 1202 est située dans une zone centrale de la première partie en retrait 1201. Cette gravure peut être une gravure sèche. Le second substrat 1200 ainsi gravé va matérialiser les électrodes fixes 620. Les électrodes fixes sont ainsi incluses dans la base. On recouvre ensuite le second substrat 1200 ainsi gravé d'une couche de matériau isolant 1203, par exemple du nitrure de silicium ou un oxyde (figure 18D). La couche de matériau isolant 1203 matérialise la couche isolante 624 (figure 15B) insérée entre électrodes fixes 620 et mobiles 621, et entre les électrodes fixes 620 et les moyens formant pivot 630.

On fixe ensuite les deux substrats 1000, 1200 ensemble en plaçant la première partie en retrait 1201 face à la couche superficielle 1003 gravée (figure 18E).

Cette fixation peut se faire par un procédé d'adhésion moléculaire après avoir préparé les surfaces à assembler de manière appropriée. Un tel procédé d'adhésion moléculaire est connu par le sigle SDB, abréviation anglo-saxonne de Silicon Direct Bonding. La seconde partie en retrait 1202 est en vis à vis avec la première région de la partie mobile 610.

On retire par exemple par une rectification mécanique grossière suivie d'une gravure humide du silicium la couche de base 1001 et la couche d'isolant inférieure 1002.1 du sandwich 1002 du premier substrat 1000 (figure 18F).

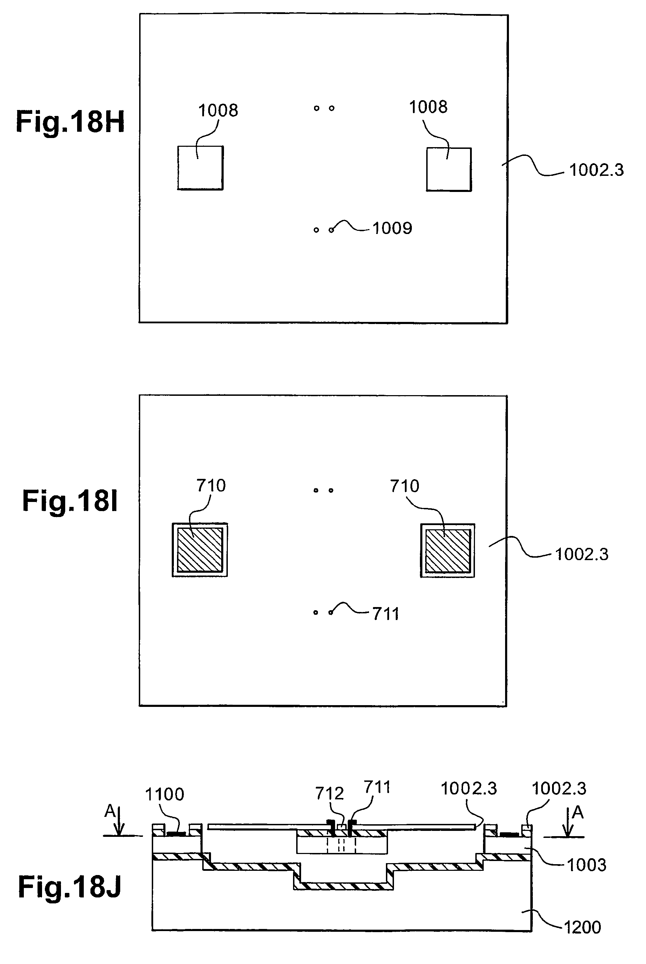

On va ensuite graver la couche intermédiaire 1002.3 et la couche isolante supérieure 1002.2 pour avoir accès à la couche superficielle 1003 de manière à délimiter des plots de contact. Les zones ainsi gravées sont référencées 1008 sur la figure 18G. On grave aussi dans la couche superficielle 1003 des trous d'interconnexion 1009 qui serviront, une fois métallisés, à faire des reprises de contact entre les électrodes mobiles et les parties 1007.1, 1007.1 de la première région de la partie mobile 610. Ces trous d'interconnexion 1009 sont creusés dans les bras de torsion 613 dans une zone où ils se projettent de la partie mobile 610 mais d'autres endroits seraient possibles. Il y a autant de trous d'interconnexion 1009 que d'électrodes mobiles. Les reprises de contact vont permettre de relier électriquement lesdites parties 1007.1, 1007.2 aux électrodes mobiles. Cette étape de gravure est illustrée sur les figures 18G et 18H.

Ensuite on dépose du métal de manière à réaliser les plots de contact 710 et les reprises de contact 711 dans les zones gravées 1008 et les trous d'interconnexion 1009 (figure 18I). Le matériau déposé peut être du tungstène, ou de l'aluminium ou tout autre métal ou alliage utilisé classiquement.

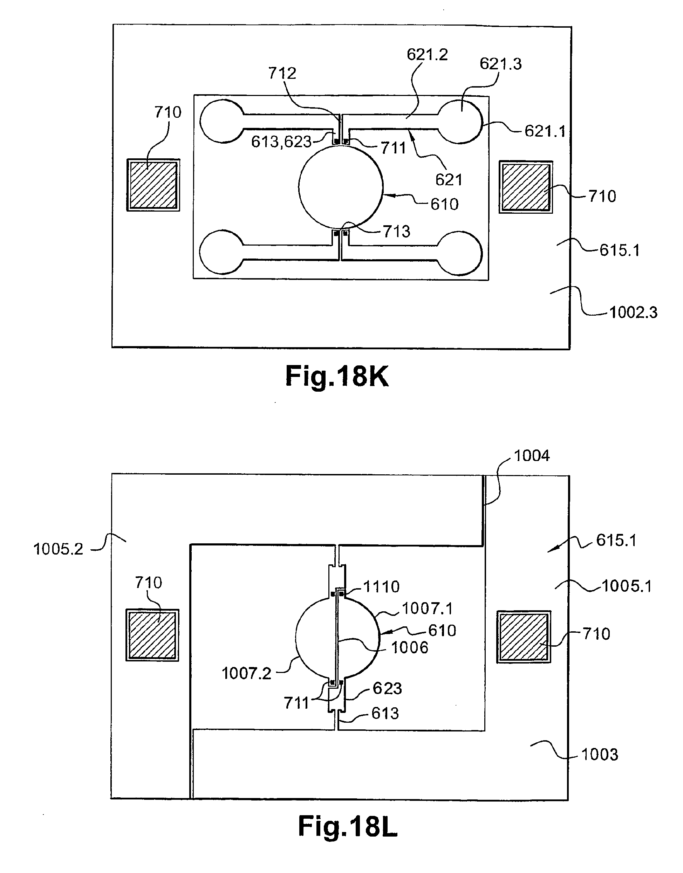

Les figures 18J et 18K montrent, en coupe et en vue de dessus respectivement, le résultat d'une étape de gravure dans la couche intermédiaire 1002.3 qui a pour but de délimiter le contour des électrodes mobiles 621 avec leurs amorces 621.3 et leurs corps 621.2, d'une seconde région de la partie mobile 610, d'une seconde région des bras de torsion et des bras d'entraînement (qui sont confondus). La seconde région de la partie mobile, la seconde région des bras de torsion, la seconde région des bras d'entraînement sont donc formées dans le matériau semi-conducteur de la couche intermédiaire 1002.3.

Les première et seconde régions de la partie mobile, des bras de torsion et des bras d'entraînement sont superposées et forment donc un empilement de la couche superficielle 1003, de la couche isolante supérieure 1002.2 et de la couche intermédiaire 1002.3. On peut prévoir une tranchée d'isolation 712 entre deux électrodes mobiles, situées de part et d'autre de l'axe 612 et qui sont solidaire du même bras de torsion 613 et une tranchée d'isolation 713 entre la partie mobile 610 et les électrodes mobiles 621.

La figure 18L est une coupe du micro-miroir ou de la micro-lentille dans un plan AA de la figure 18J. Par rapport à la figure 18C, on y voit les plots de contact 710 et les reprises de contact 711.

La zone réfléchissante 617 d'un micro-miroir peut être réalisée par le matériau semi-conducteur de la couche intermédiaire 1002.3 se trouvant au niveau de la seconde région de la partie mobile 610 s'il présente une réflectivité suffisante. On pourrait également la réaliser par métallisation, par exemple d'or, ou d'argent, ou d'aluminium ou autre, de ladite seconde région de la partie mobile.

En ce qui concerne la réalisation d'une micro-lentille, on peut rapporter, par exemple par collage, une pastille réfringente lenticulaire 617 sur le cadre formant la partie mobile 610. On suppose que cette pastille est esquissée sur la figure 18K. La zone 617 pourrait également représenter la zone réfléchissante d'un micro-miroir.

Les termes « gauche », « droit », « haut », « bas », « inférieur », « supérieur », « horizontal », « vertical » et autres sont applicables aux modes de réalisation montrés et décrits en relation avec les figures. Ils sont employés uniquement pour les besoins de la description et ne s'appliquent pas nécessairement à la position prise par le micro-miroir lorsqu'il est en fonctionnement.

Bien que plusieurs modes de réalisation de micro-miroirs aient été décrits, la présente invention n'est pas strictement limitée à ces modes de réalisation. Notamment le nombre d'actionneurs n'est pas limité à deux comme illustré. Ce nombre peut être quelconque, il y a au moins un actionneur d'un côté de l'axe et au moins un actionneur de l'autre côté.

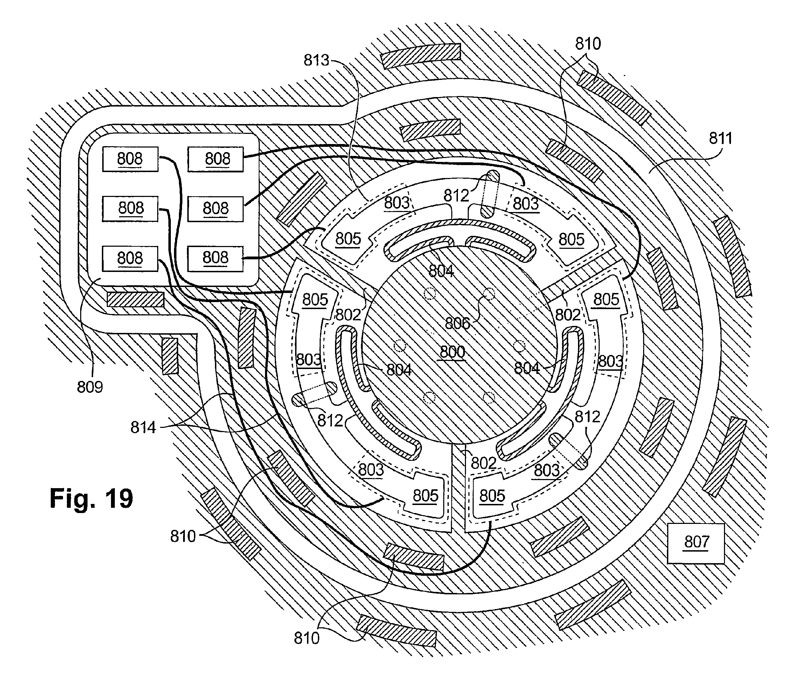

La figure 19 représente un actionneur électrostatique permettant à la fois le déplacement en rotation et/ou en translation d'un objet 800 et comportant trois actionneurs ou plus.

L'objet 800 peut avoir un contour fermé présentant une courbure. Sur la figure 19, il est représenté comme ayant une forme circulaire, mais d'autres formes sont possibles (elliptique par exemple).

Les actionneurs ont alors une forme adaptée à celle de l'objet. Ils sont par exemple en forme d'arc de cercle, comme illustré sur la figure 19.

Cet objet 800 peut être un composant optique ou un support pour un composant optique, le composant pouvant notamment être un miroir pour des applications de pointage d'un faisceau, ou de balayage, ou d'optique adaptative, ou de mise en forme de faisceau, d'alignement de miroirs d'une cavité laser, ou d'alignement de composants optiques en général.

Par exemple, le parallélisme et la distance entre deux miroirs peuvent être réalisés grâce à cet actionneur.

Un tel système peut être utile pour un système optique d'interférométrie, ou pour un filtre accordable Fabry-Pérot, ou pour une cavité laser.

Mais un tel système actionneur peut aussi être utilisé pour l'alignement d'une lentille avec un système optique, son centrage et le réglage de la distance entre ces deux éléments.

Un tel système peut aussi être utilisé pour régler la distance entre une lentille de focalisation et, par exemple, un média de stockage optique pour l'écriture ou la lecture et/ou pour régler le point de focalisation sur ce média grâce à la rotation de la lentille.

Dans cette application, l'actionneur peut aussi servir à régler le positionnement d'un miroir par rapport au média.

L'actionneur peut être utilisé pour entraîner un miroir déformable d'optique adaptative.

Il peut également être utilisé pour réaliser une inductance variable ou une résistance variable.

Il est représenté schématiquement en figure 19 sur laquelle la référence 800 désigne la partie en déplacement ; il peut s'agir d'un composant optique tel qu'un miroir, par exemple un miroir d'épaisseur 20 µm, ou d'un support pour un composant optique.

Des bras 802, de préférence fins, d'épaisseur par exemple 2 µm, permettent le soutien du miroir 800 au-dessus de la cavité pendant sa fabrication.

Des moyens 803 d'actionnement du type des ceux illustrés en figures 1A, 13A, 14A, sont disposés autour de la partie 800 à déplacer. Sur la figure 19 3 dispositifs d'actionnement sont représentés. Chacun d'eux a par exemple une épaisseur de l'ordre de 2 µm. La référence 812 désigne un moyens formant pivot, par exemple un plot, comme dans les modes de réalisation déjà présentés ci-dessus.

Une ou plusieurs boucles 804 permettent un étirement radial entre les moyens d'actionnement 803 et la partie centrale 800. Une boucle a par exemple une épaisseur de 20 µm environ. Ces moyens d'étirement radial sont facultatifs, et permettent d'augmenter la possibilité de déplacement des moyens 800 par rapport aux moyens d'actionnement 803.

Chaque boucle d'étirement 804 permet donc un allongement artificiel entre les moyens 803 et la partie centrale 800 pendant le déplacement. Cela favorise les grands déplacements.

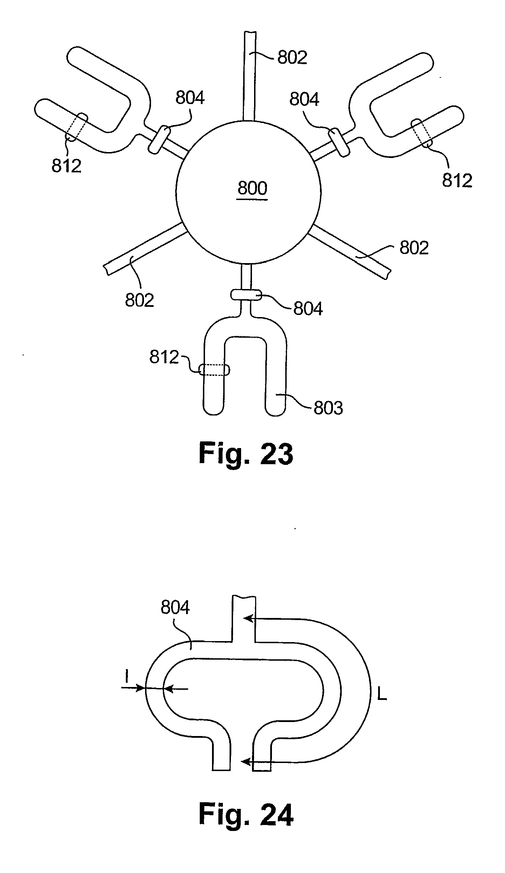

Chaque boucle est raide en flexion verticale, grâce à une épaisseur importante (par exemple comprise entre 10 µm et 20 µm ou 40 µm), et elle est souple en flexion latérale grâce à sa largeur 1 faible (comprise par exemple entre 1 à 5 µm) et à sa longueur L importante (supérieure à 50 ou à 100 µm, ou comprise entre 50 et 200 µm). La figure 24 représente une telle boucle 804.

Eventuellement, pour un ou plusieurs des moyens d'actionnement 803, une amorce 805 permet de limiter le champ ou la tension d'amorçage, comme déjà expliqué ci-dessus.

Le dispositif peut en outre comporter des pions 806, situés entre les moyens 800 et le substrat (donc non visibles sur la vue de dessus constituée par la figure 19), permettant d'éviter un collage de ces moyens 800 sur ce substrat.

La référence 807 désigne des plots de connexion des actionneurs (pour l'électrode mobile ou les électrodes mobiles).

La référence 808 des plots de connexion des électrodes fixes, disposés dans des ouvertures 809 de reprise des contacts.

Les références 810 désignent des butées de scellement, en oxyde par exemple, et la référence 811 un cordon de scellement situé entre deux rangées de butées. Ce cordon 811 est par exemple en polymère photosensible.

Des électrodes fixes 813 sont disposées dans le substrat du dispositif, afin d'interagir avec les électrodes mobiles 803 comme déjà expliqué ci-dessus en liaison avec les figures 1A - 15.

Des pistes 814 de connexions électriques relient les électrodes fixes 813 aux plots 808.

Dans le cas d'un miroir 800, on peut avoir des miroirs circulaires ou d'une autre forme avec des dimensions allant jusqu'à quelques mm de largeur, par exemple 10 mm de diamètre ou de largeur ou de dimension maximale.

Il est possible d'évider la partie centrale du bloc 800, par exemple pour positionner une lentille dans l'évidement obtenu.

L'épaisseur de cette partie 800 peut être comprise entre quelques µm et quelques dizaines de µm, par exemple entre 5µm et 30 µm, par exemple encore de l'ordre de 20 µm, pour un diamètre compris par exemple entre 200 µm et 500 µm ou 1mm, ce qui assure une faible déformation du miroir 800 lui-même pendant le déplacement.

Des bras 802 permettent la fabrication du miroir. Ils sont suffisamment fins (par exemple 2 µm d'épaisseur et 10 µm de largeur) pour être souples et facilement fléchis. Leur longueur peut être facilement adaptée pour ne pas gêner le mouvement du miroir 800.

Les moyens d'actionnement 803 peuvent être positionnés radialement, ce qui favorise le mouvement du miroir mais limite la capacité. Une telle variante est illustrée en figure 23, sur laquelle des références identiques à celles de la figure 19 y désignent des éléments similaires ou correspondants.

Les bras d'un actionneur 803 sont épais, ils ont par exemple une épaisseur comprise entre 1 µm et 10 µm (par exemple 3 µm) et une largeur comprise entre par exemple 10 µm et 150 µm ou 200 µm. Une largeur supérieure à 500 µm de la partie 805 d'extrémité permet une faible tension d'amorçage.

Ces bras 803 peuvent être enroulés ou repliés pour limiter l'encombrement.

Les actionneurs permettent un déplacement des moyens 800 hors du plan défini par leur position de repos, grâce à un mouvement d'actionnement comme expliqué ci-dessus, mettant en oeuvre à la fois des forces électrostatiques d'attraction et des forces mécaniques de rappel.

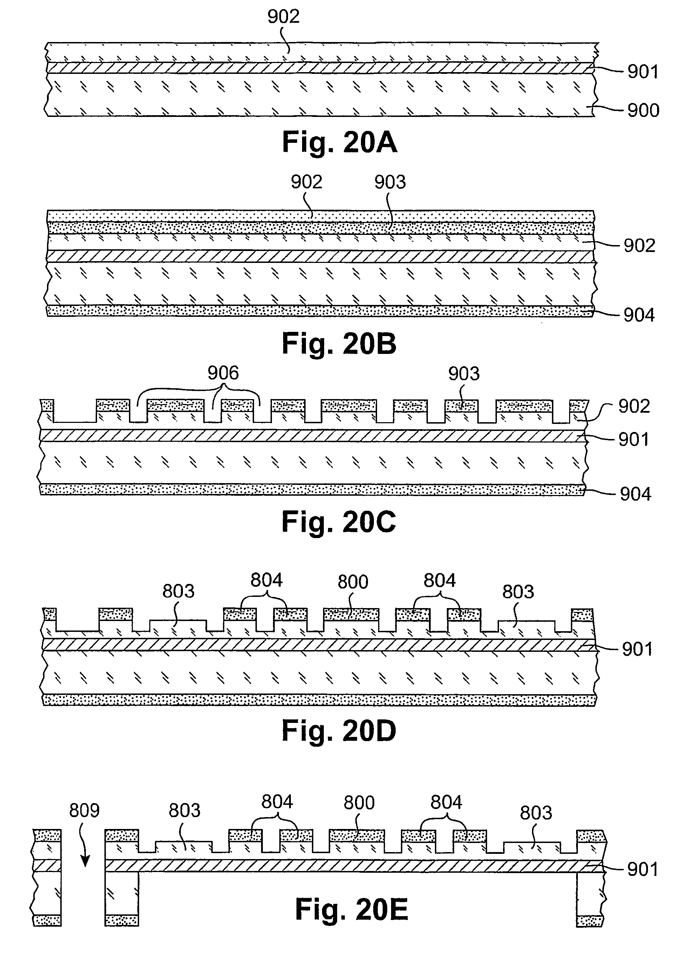

Des étapes de réalisation du miroir et des électrodes mobiles d'un tel dispositif vont être décrites en liaison avec les figures 20A-20E.

Dans une première étape (figure 20A) on sélectionne un composant de type semi-conducteur sur isolant, par exemple de type SOI, comportant un substrat 900 en un premier matériau semi-conducteur ; Il s'agit par exemple d'un substrat en silicium, qui peut avoir une épaisseur comprise entre 100 µm et 500 µm, par exemple 450 µm. Une couche 901 isolante, typiquement en SiO₂, par exemple d'épaisseur de l'ordre de 10µm, repose sur ce substrat 900, cette couche 901 elle-même supportant une couche 902 d'un deuxième matériau semi-conducteur, par exemple aussi en silicium, d'une épaisseur comprise en 1 ou 5 micromètres et 10 ou 50 micromètres, par exemple de l'ordre de 20 µm.

Puis (figure 20B) il est procédé à une oxydation thermique de ce substrat SOI : on obtient ainsi deux couches, 903, 904 d'oxyde de silicium, de part et d'autre du substrat.

Une couche 905 d'une résine photosensible est déposée sur la couche d'oxyde 903, qui repose elle-même sur la couche 902.

Il est ensuite procédé (figure 20C), par lithographie à l'aide de la résine 905, à une gravure de l'oxyde 903 et à une gravure partielle de la couche de silicium 902, puis à la formation de motifs 906. Ceux-ci vont permettre de délimiter le support central 800, les électrodes 803 et éventuellement les moyens 804 d'étirement.

Puis (figure 20D) on procède, par lithographie, à une gravure de l'oxyde 903 dans les zones destinées à former les actionneurs 803 et à une gravure de la couche 902 de silicium, par exemple sur environ 18 µm, jusqu'à une détection de fin de gravure. La zone 800 est alors protégée par l'oxyde 903.

Il est ensuite de possible de graver la face arrière (figure 20E) du substrat, par lithographie, gravure de l'oxyde 904 en face arrière et gravure du silicium 900. La gravure peut être une gravure KOH ou TMAH ou une gravure profonde sèche.

Il est enfin procédé à une gravure de l'oxyde 901. La tranchée 809 est elle aussi obtenue par gravure.

La partie mobile du dispositif est alors prête.

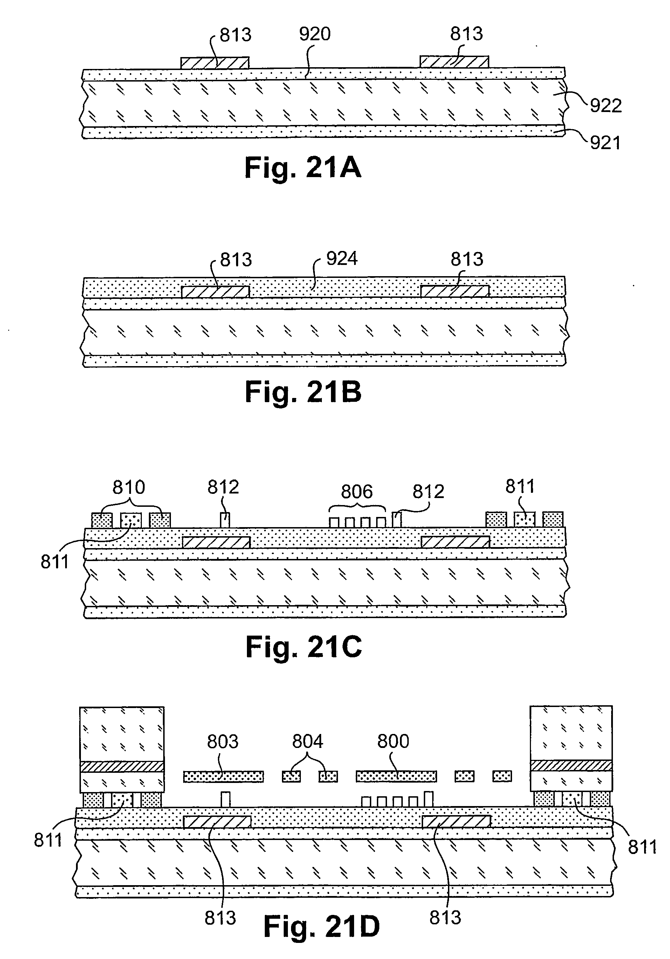

La fabrication des électrodes fixes et des butées 806 va être expliquée en liaison avec les figures 21A-21E.

On procède tout d'abord (figure 21A) à la formation d'une couche isolante 920, 921, par exemple par oxydation, de part et d'autre d'un substrat 922 en semi-conducteur, par exemple en silicium, puis à un dépôt métallique, à une lithographie et à une gravure d'électrodes fixes 813, par exemple en aluminium.

Une couche d'oxyde 924 est déposée sur la face du substrat sur laquelle les électrodes 813 ont été réalisées, par exemple par technique PECVD (figure 21B), cette couche est ensuite planarisée.

On forme ensuite (figure 21C), par dépôt, des butées 810 de scellement, des plots 812 et des plots anti-collage 806. Il est ensuite procédé à une gravure.

Un cordon de scellement 811 peut ensuite être réalisé, par lithographie d'une couche polymère photosensible déposée entre les butées 810.

On procède ensuite (figure 21D) à l'assemblage des deux substrats (celui de la figure 20E et celui de la figure 21C), par scellement à l'aide du cordon de scellement 811. Par souci de clarté, la figure 21D ne représente pas tous les éléments de la partie mobile ; en particulier, seule un cordon 804 est représenté, ainsi qu'un seul actionneur 803.

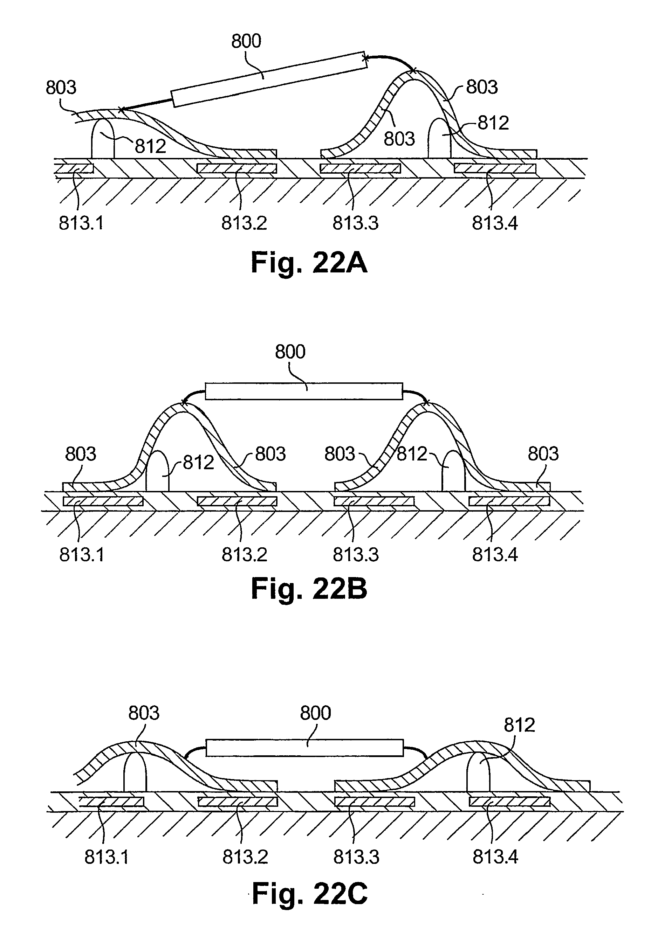

Les figures 22A-22C illustrent un fonctionnement schématisé du dispositif qui vient d'être décrit.

Sur la figure 22A, les électrodes fixes 813-2 et 813 - 4 sont celles auxquelles sont affectées les tensions les plus importantes, tandis que les électrodes 813 - 1 et 813 - 3 se voient affecter des tensions plus faibles. Il en résulte un mouvement des membranes souples et une inclinaison du miroir ou du composant optique ou du support 800, comme indiqué sur la figure 22A.

Le composant ou le support 800 peut être ramené en position haute, comme illustré sur la figure 22B, en affectant aux électrodes fixes 813 - 1 et 813 - 4 les tensions les plus importantes, tandis que les électrodes 813 - 2 et 813 - 3 se voient affecter les tensions les plus faibles. Les deux membranes souples 803 sont alors en position haute, ainsi que le composant 800.

Une position basse peut être atteinte (figure 22C) en affectant aux électrodes 813 - 2 et 813 - 3 les tensions les plus importantes, tandis que les autres électrodes se voient affecter les tensions les plus faibles.

### Références bibliographiques

[1] : "A Novel Electrostatic Actuator for Micro Deformable Mirrors : Fabrication and Test", C. Divoux, J. Charton, W. Schwartz, E. Stadler, J. Margail, L. Jocou, T. Enot, J.C. Barbe, J. Chiaroni and P. Berruyer, Transducers'03, IEEE, 12th International Conference on Solide-State Sensors, Actuators and Microsystems, Boston, Massachussetts, USA, June 8-12, 2003.
[2] : "Electrostatically Excited Diaphragm driven as a Loudspeaker", P. Rangsten, L. Smith, L. Rosengren, B. Hök, Transducers 95, the 8th International Conference on Solid State Sensors and Actuators, and Eurosensors IX, Stockholm, Sweden, June 25-29, 1995.
[3] : "Electrostatic Curved Electrode", Rob Legtenberg, John Gilbert, Stephen D. Senturia, Miko Elwenspoeck, Journal of Microelectromechanical System, vol. 6, n°3, September 1997.
[4] : "A new Electrostatic Actuator providing improved Stroke Length and Force", Jeans Branebjerg, Perter Gravesen, Micro Electro Mechanical Systems'92, Travemünde (Germany), February 4-7, 1992.

## Revendications

1. Dispositif d'actionnement électrostatique, comportant :
- au moins une électrode (10, 33, 35, 37, 135, 137, 139, 210, 335, 337, 339) dite électrode mobile, comportant au moins une partie souple, mobile par rapport à un substrat (22, 123, 222, 322),
- au moins deux électrodes (12, 14, 62, 64, 82, 84, 92, 94, 132, 134, 136), fixes par rapport au substrat, situées d'un même côté par rapport à l'électrode mobile et chacune en face d'une partie de l'électrode mobile,
- des moyens (18, 28, 98, 158, 198, 398, 399), formant au moins un pivot d'au moins une portion de l'électrode mobile, l'électrode mobile pouvant s'appuyer sur le pivot lorsqu'une des électrodes fixes attire la partie de l'électrode mobile en face de laquelle cette électrode fixe est située, l'autre partie de l'électrode mobile pouvant s'éloigner du substrat sous l'effet de forces mécaniques de rappel.

2. Dispositif selon la revendication 1, l'électrode mobile comportant au moins une partie mobile suivant au moins une direction perpendiculaire à ce substrat.

3. Dispositif selon la revendication 1 ou 2, les deux électrodes fixes étant séparées de l'électrode mobile par une couche isolante (20, 120, 220, 224, 320) formée sur le substrat et/ou l'électrode mobile.

4. Dispositif selon l'une des revendications 1 à 3, la partie mobile de l'électrode mobile étant reliée par un plot (33, 34, 36) à une membrane (30).

5. Dispositif selon l'une des revendications 1 à 4, les moyens formant pivot comportant au moins un plot (18, 98, 158, 198, 398, 399),) fixe par rapport au substrat.

6. Dispositif selon l'une des revendications 1 à 4, les moyens formant pivot comportant au moins un bras (28) disposé latéralement par rapport à la partie mobile, ou deux bras disposés de part et d'autre de la partie mobile.

7. Dispositif selon l'une des revendications 1 à 6, la partie mobile de l'électrode mobile formant un coude (77).

8. Dispositif selon l'une des revendications 1 à 6, comportant quatre électrodes (82, 84, 92, 94) fixes, disposées deux à deux l'une en face de l'autre, l'électrode mobile comportant deux parties mobiles disposées en croix.

9. Dispositif selon la revendication 8, comportant deux pivots (79, 80).

10. Dispositif selon l'une des revendications 1 à 9, l'électrode mobile comportant au moins une partie encastrée ou fixée sur, ou dans, le substrat ou la couche isolante.

11. Dispositif selon l'une des revendications 1 à 10, chaque électrode fixe étant située en face d'au moins une extrémité de l'électrode mobile, sur un côté des moyens formant pivot.

12. Dispositif selon l'une des revendications 1 à 6, l'électrode mobile comportant au moins deux parties mobiles (135, 137, 139), chacune étant libre à une de ses extrémités, une électrode fixe (132, 134, 136) étant en face de chaque partie mobile (135, 137, 139).

13. Dispositif selon la revendication 12, l'électrode mobile comportant trois parties mobiles (135, 137, 139), les électrodes fixes étant au nombre de trois (132, 134, 136), chacune située en face d'une partie de l'électrode mobile.

14. Dispositif selon la revendication 12 ou 13, les parties mobiles de l'électrode mobile étant de forme sensiblement allongée, et étant décalées l'une par rapport à l'autre, latéralement ou angulairement.

15. Dispositif selon l'une des revendications 1 - 6, comportant trois électrodes fixes, la partie mobile comportant trois bandes (135, 137, 139) reliées par une extrémité (140).

16. Dispositif d'actionnement électrostatique, comportant :
- une partie ou membrane, dite partie ou membrane souple et mobile par rapport à un substrat (22, 123), cette partie comportant au moins deux électrodes (13, 15, 135, 137, 139), séparées par une portion (11, 141) isolante électriquement,
- au moins une électrode (17, 133), fixe par rapport au substrat, située d'un même côté par rapport à la partie mobile et dont une première et une deuxième parties sont respectivement situées en face d'une des électrodes de la partie mobile,
- des moyens (18, 28, 98, 158, 198, 398, 399), formant au moins un pivot d'au moins une portion de la partie ou de la membrane mobile ou souple, qui peut s'appuyer sur le pivot lorsqu'une des électrodes fixes attire l'une des électrodes de la partie ou de la membrane mobile ou souple, l'autre électrode mobile pouvant s'éloigner du substrat sous l'effet de forces mécaniques de rappel.

17. Dispositif selon la revendication 16, la partie mobile l'étant suivant au moins une direction perpendiculaire à au substrat.

18. Dispositif selon la revendication 16 ou 17, les deux électrodes fixes étant séparées de l'électrode mobile par une couche isolante (20, 120, 220, 224, 320) formée sur le substrat et/ou l'électrode mobile.

19. Dispositif selon l'une des revendications 16 à 18, la partie mobile tant reliée par un plot (33, 34, 36) à une membrane (30).

20. Dispositif selon l'une des revendications 16 à 19, les moyens formant pivot comportant au moins un plot (18, 98, 158, 198, 398, 399),) fixe par rapport au substrat.

21. Dispositif selon l'une des revendications 16 à 20, les moyens formant pivot comportant au moins un bras (28) disposé latéralement par rapport à la partie mobile, ou deux bras disposés de part et d'autre de la partie mobile.

22. Dispositif selon l'une des revendications 16 à 21, la partie mobile formant un coude (77).

23. Dispositif selon l'une des revendications 16 à 22, comportant quatre électrodes (82, 84, 92, 94) fixes, disposées deux à deux l'une en face de l'autre, la partie mobile comportant deux parties mobiles disposées en croix.

24. Dispositif selon la revendication 23, comportant deux pivots (79, 80).

25. Dispositif selon l'une des revendications 16 à 25, la partie mobile comportant au moins une partie encastrée ou fixée sur, ou dans, le substrat ou la couche isolante.

26. Dispositif selon l'une des revendications 16 à 25, chaque électrode fixe étant située en face d'au moins une extrémité d'une électrode mobile, sur un côté des moyens formant pivot.

27. Dispositif selon l'une des revendications 16 à 21, la partie mobile comportant au moins deux électrodes mobiles (135, 137, 139), reliées à une extrémité par une portion isolante (141), chaque électrode mobile étant libre à une de ses extrémités, une électrode fixe (132, 134, 136) étant en face de chaque électrode mobile (135, 137, 139).

28. Dispositif selon la revendication 27, la partie mobile comportant trois électrodes mobiles (135, 137, 139).

29. Dispositif selon la revendication 27 ou 28, les électrodes mobiles étant de forme sensiblement allongée, et étant décalées l'une par rapport à l'autre, latéralement ou angulairement.

30. Dispositif selon l'une des revendications 16 à 29, comportant au moins deux électrodes fixes.

31. Dispositif selon l'une des revendications 1 à 30, un élément (196, 350) de contact électrique étant fixé sur la partie mobile.

32. Dispositif selon la revendication 1 ou 16, l'électrode mobile, les électrodes fixes et le pivot étant réalisées sensiblement dans un plan en surface du substrat.

33. Dispositif selon l'une des revendications précédentes, au moins une électrode mobile comportant des moyens magnétiques (232, 234) ou partiellement magnétiques, le dispositif comportant en outre des moyens magnétiques fixes (242, 244, 342, 344) par rapport au substrat, pouvant établir un contact avec les moyens magnétiques de l'électrode mobile.

34. Dispositif selon la revendication 33, la force électrostatique et les forces magnétiques mises en jeu lors d'un contact ayant une différence relative d'au moins 10 %.

35. Dispositif selon la revendication 33 ou 34, la ou les force(s) électrostatique (s) et la ou les forces magnétiques mises en jeu lors d'un contact étant supérieures aux forces de rappel mécanique.

36. Dispositif selon la revendication 35, la force électrostatique et les forces magnétiques mises en jeu lors d'un contact étant au moins 10 fois supérieures aux forces de rappel mécanique.

37. Dispositif selon l'une des revendications 33 à 36, les moyens magnétiques de l'électrode mobile et les moyens magnétiques fixes définissant au moins deux positions stables du dispositif.

38. Dispositif selon l'une des revendications 1 à 37, comportant en outre au moins une électrode fixe et une électrode mobile définissant une capacité.

39. Dispositif selon l'une des revendications 1 à 38, les moyens formant pivot permettant de maintenir, par rapport au substrat, un point d'une électrode mobile à une hauteur comprise entre 50 nm et 20µm.

40. Dispositif d'actionnement d'un composant optique, comportant :
- au moins un dispositif d'actionnement électrostatique selon l'une des revendications 1 à 39,
- des moyens (610, 617) de support d'un composant optique, reliés à la membrane ou à l'électrode mobile du dispositif d'actionnement, et étant entraînés en déplacement par cette membrane ou cette électrode lors du déplacement de cette membrane ou cette électrode.

41. Dispositif selon la revendication 40, au moins une des électrodes d'un des dispositifs d'actionnement comportant un corps allongé (621.1) ayant une première largeur suivant une première direction et une extrémité (621.3) dite amorce, ayant une deuxième largeur plus large que ladite première largeur.

42. Dispositif selon l'une des revendication 40 ou 41, comportant deux dispositifs d'actionnement électrostatique selon l'une des revendications 1 à 39, les moyens (610, 617) de support d'un composant optique étant reliés à ces deux dispositifs.

43. Dispositif selon la revendication 42, les deux dispositifs d'actionnement étant disposés de part et d'autre des moyens de support d'un composant optique.

44. Dispositif selon la revendication 42, les deux dispositifs d'actionnement étant disposés d'un même côté des moyens de support d'un composant optique.

45. Dispositif selon l'une des revendications 42 à 44, les deux dispositifs d'actionnement s'étendant suivant deux directions sensiblement parallèles entre elles.

46. Dispositif selon l'une des revendications 42 à 44, les deux dispositifs d'actionnement comportant chacun une partie courbe.

47. Dispositif selon la revendication 46, les deux dispositifs d'actionnement étant reliées mécaniquement par au moins une extrémité commune (621.3).

48. Dispositif selon l'une des revendications 42 à 47, comportant deux bras d'entraînement (623) reliant les deux dispositifs d'actionnement électrostatique aux moyens (610, 617) de support d'un composant optique.

49. Dispositif selon l'une des revendications 42 à 48, comportant un substrat dans lequel une cavité (626) permet un pivotement des moyens de support du composant optique.

50. Dispositif selon l'une des revendications 42 à 49, comportant en outre un cadre (615) et des moyens (613) de liaison reliant au cadre le dispositif d'actionnement électrostatique et les moyens (610, 617) de support d'un composant optique.

51. Dispositif selon la revendication 50, les moyens (613) de liaison comportant des bras (613) de torsion.

52. Dispositif selon la revendication 42, les moyens (800) de support ayant un contour fermé présentant une courbure.

53. Dispositif selon la revendication 52, les moyens d'activation électostatique étant disposés suivant ledit contour ou le long dudit contour.

54. Dispositif selon la revendication 52, les moyens d'activation électostatique étant disposés radialement par rapport audit contour.

55. Dispositif selon l'une des revendications 52 à 54, le contour étant circulaire.

56. Dispositif selon l'une des revendications 52 à 55, comportant en outre des moyens (804) d'étirement disposés entre les moyens d'activation électrostatiques et les moyens (800) de support.

57. Dispositif selon la revendication 56, les moyens (804) d'étirement comportant au moins une boucle d'étirement.

58. Procédé de réalisation d'un dispositif selon l'une des revendications 1 à 39, comportant:
- la réalisation d'un premier substrat, comportant une ou deux électrodes fixes par rapport au substrat,
- la réalisation de moyens (630) formant pivot et d'une électrode ou d'une membrane mobile, comportant au moins deux électrodes séparées par une portion isolante, cet électrode ou cette membrane étant mobile par rapport au substrat.

59. Procédé selon la revendications 58, l'électrode ou la membrane mobile étant réalisée sur une couche sacrificielle (532) formée ou déposée sur le substrat, puis éliminée après formation de la membrane ou de l'électrode mobile.

60. Procédé selon la revendications 58, l'électrode ou la membrane mobile étant réalisée en surface d'un deuxième substrat (1000) assemblé ensuite avec le premier (1200).

61. Procédé selon la revendications 59, l'électrode ou la membrane mobile étant ensuite dégagée de la surface du deuxième substrat par amincissement de celui - ci.

62. Procédé selon l'une des revendications 58 à 61, les moyens formant pivot étant formés sur le premier substrat.

## Claims

1. Electrostatic actuation device comprising:
- at least one electrode (10, 33, 35, 37, 135, 137, 139, 210, 335, 337, 339) called the mobile electrode, comprising at least one flexible part, free to move with respect to a substrate (22, 123, 222, 322),
- at least two electrodes (12, 14, 62, 64, 82, 84, 92, 94, 132, 134, 136), fixed with respect to the substrate, located on the same side as the mobile electrode and each facing a part of the mobile electrode,
- means (18, 28, 98, 158, 198, 398, 399), forming at least one pivot of at least one portion of the mobile electrode, the mobile electrode may bear on the pivot when one of the fixed electrodes attracts the part of the mobile electrode facing which this fixed electrode is located, the other part of the mobile electrode possibly moving away from the substrate under the effect of mechanical return forces.

2. Device according to claim 1, the mobile electrode comprising at least one mobile part along at least one direction perpendicular to this substrate.

3. Device according to claim 1 or 2, the two fixed electrodes being separated from the mobile electrode by an insulating layer (20, 120, 220, 224, 320) formed on the substrate and/or the mobile electrode.

4. Device according to one of claims 1 to 3, the mobile part of the mobile electrode being connected by a pad (33, 34, 36) to a membrane (30).

5. Device according to one of claims 1 to 4, the means forming the pivot comprising at least one pad (18, 98, 158, 198, 398, 399) fixed with respect to the substrate.

6. Device according to one of claims 1 to 4, the means forming the pivot comprising at least one arm (28) arranged laterally with respect to the mobile part, or two arms arranged on each side of the mobile part.

7. Device according to one of claims 1 to 6, the mobile part of the mobile electrode forming an elbow (77).

8. Device according to one of claims 1 to 6, comprising four fixed electrodes (82, 84, 92, 94) arranged in pairs facing each other, the mobile electrode comprising two mobile parts arranged crosswise.

9. Device according to claim 8, comprising two pivots (79, 80).

10. Device according to one of claims 1 to 9, the mobile electrode comprising at least one part embedded or fixed on or in the substrate or the insulating layer.

11. Device according to one of claims 1 to 10, each fixed electrode being located facing at least one end of the mobile electrode, on one side of the means forming the pivot.

12. Device according to one of claims 1 to 6, the mobile electrode comprising at least two mobile parts (135, 137, 139), each part being free at one of its ends, a fixed electrode (132, 134, 136) located facing each mobile part (135, 137, 139).

13. Device according to claim 12, the mobile electrode comprising three mobile parts (135, 137, 139), there being three fixed electrodes (132, 134, 136), each located facing a part of the mobile electrode.

14. Device according to claim 12 or 13, the mobile parts of the mobile electrode being approximately elongated, and being laterally or angularly offset from each other.

15. Device according to one of claims 1 - 6, comprising three fixed electrodes, the mobile part comprising three strips (135, 137, 139) connected through an end (140).

16. Electrostatic actuation device comprising:
- a part or membrane, called the mobile or flexible membrane with respect to a substrate (22, 123), this part comprising at least two electrodes (13, 15, 135, 137, 139), separated by an electrically insulating portion (11, 141),
- at least one electrode (17, 133), fixed with respect to the substrate, located on the same side of the mobile part and for which a first part and a second part are located facing one of the corresponding electrodes of the mobile part,
- means (18, 28, 98, 158, 198, 398, 399), forming at least one pivot of at least one portion of the mobile or flexible part or membrane that may bear on the pivot when one of the fixed electrodes attracts one of the electrodes of the mobile or flexible part or membrane, the other mobile electrode being free to move away from the substrate under the effect of mechanical return forces.

17. Device according to claim 16, the mobile part being free to move along at least a direction perpendicular to the substrate.

18. Device according to claim 16 or 17, the two fixed electrodes being separated from the mobile electrode by an insulating layer (20, 120, 220, 224, 320) formed on the substrate and/or the mobile electrode.

19. Device according to one of claims 16 to 18, the mobile part being connected by a pad (33, 34, 36) to a membrane (30).

20. Device according to one of claims 16 to 19, the means forming the pivot comprising at least one pad (18, 98, 158, 198, 398, 399) fixed with respect to the substrate.

21. Device according to one of claims 16 to 20, the means forming the pivot comprising at least one arm (28) arranged laterally with respect to the mobile part, or two arms arranged on each side of the mobile part.

22. Device according to one of claims 16 to 21, the mobile part forming an elbow (77).

23. Device according to one of claims 16 to 22, comprising four fixed electrodes (82, 84, 92, 94) arranged in pairs facing each other, the mobile part comprising two mobile parts arranged crosswise.

24. Device according to claim 23, comprising two pivots (79, 80).

25. Device according to one of claims 16 to 25, the mobile part comprising at least one part embedded or fixed on or in the substrate or the insulating layer.

26. Device according to one of claims 16 to 25, each fixed electrode being located facing at least one end of a mobile electrode, on one side of the means forming the pivot.

27. Device according to one of claims 16 to 21, the mobile part comprising at least two mobile electrodes (135, 137, 139), connected at one end by an insulating portion (141), each mobile electrode being free at one of its ends, a fixed electrode (132, 134, 136) facing each mobile electrode (135, 137, 139).

28. Device according to claim 27, the mobile part comprising three mobile electrodes (135, 137, 139).

29. Device according to claim 27 or 28, the mobile electrodes being approximately elongated and being laterally or angularly offset from each other.

30. Device according to one of claims 16 to 29, comprising at least two fixed electrodes.

31. Device according to one of claims 1 to 30, an electrical contact element (196, 350) being fixed on the mobile part.

32. Device according to claim 1 or 16, the mobile electrode, the fixed electrodes and the pivot being approximately in a plane on the surface of the substrate.

33. Device according to one of the previous claims, at least one mobile electrode comprising magnetic or partially magnetic means (232, 234), the device also comprising fixed magnetic means (242, 244, 342, 344) with respect to the substrate, that can create a contact with the magnetic means of the mobile electrode.

34. Device according to claim 33, the electrostatic force and the magnetic forces involved during a contact having a relative difference of about 10%.

35. Device according to claim 33 or 34, the electrostatic force(s) and the magnetic force(s) involved during a contact being greater than the mechanical return forces.

36. Device according to claim 35, the electrostatic force and the magnetic forces involved during a contact being at least 10 times greater than the mechanical return forces.

37. Device according to one of claims 33 to 36, the magnetic means of the mobile electrode and the fixed magnetic means defining at least two stable positions of the device.

38. Device according to one of claims 1 to 37, also comprising at least one fixed electrode and one mobile electrode defining a capacitor.

39. Device according to one of claims 1 to 38, the means forming the pivot being used to hold a point of a mobile electrode at a height of between 50 nm and 20µm with respect to the substrate.

40. Actuation device for an optical component comprising:
- at least one electrostatic actuation device according to one of claims 1 to 39,
- support means (610, 617) for an optical component, connected to the membrane or to the mobile electrode of the actuation device, and being driven in displacement by this membrane or this electrode during displacement of this membrane or this electrode.

41. Device according to claim 40, at least one of the electrodes of one of the actuation devices comprising an elongated body (621.1) with a first width along a first direction and an end (621.3) called the starter with a second width wider than the said first width.

42. Device according to one of claims 40 or 41, comprising two electrostatic actuation devices according to one of claims 1 to 39, the support means (610, 617) of an optical component being connected to these two devices.

43. Device according to claim 42, the two actuation devices being arranged on each side of the support means of an optical component.

44. Device according to claim 42, the two actuation devices being arranged on the same side as the support means of an optical component.

45. Device according to one of claims 42 to 44, the two actuation devices extending along two directions approximately parallel to each other.

46. Device according to one of claims 42 to 44, the two actuation devices each comprising a curved part.

47. Device according to claim 46, the two actuation devices being mechanically connected by at least one common end (621.3).

48. Device according to one of claims 42 to 47, comprising two drive arms (623) connecting the two electrostatic actuation devices to the support means (610, 617) of an optical component.

49. Device according to one of claims 42 to 48, comprising a substrate in which a cavity (626) enables pivoting of support means of the optical component.

50. Device according to one of claims 42 to 49, also comprising a frame (615) and connecting means (613) connecting the electrostatic actuation device and the support means (610, 617) of an optical component to the frame.

51. Device according to claim 50, the connecting means (613) comprising torsion arms (613).

52. Device according to claim 42, the support means (800) having a closed contour with a curvature.

53. Device according to claim 52, the electrostatic actuation means being arranged around or along the said contour.

54. Device according to claim 52, the electrostatic actuation means being arranged radially with respect to the said contour.

55. Device according to one of claims 52 to 54, the contour being circular.

56. Device according to one of claims 52 to 55, also comprising stretching means (804) arranged between the electrostatic actuation means and the support means (800).

57. Device according to claim 56, the stretching means (804) comprising at least one stretching loop.

58. Manufacturing process for a device according to one of claims 1 to 39, comprising:
- creation of a first substrate, comprising one or two fixed electrodes with respect to the substrate,
- manufacture of means (630) forming the pivot and a mobile electrode or membrane, comprising at least two electrodes separated by an insulating portion, this electrode or this membrane being free to move with respect to the substrate.

59. Process according to claim 58, the mobile electrode or membrane being made on a sacrificial layer (532) formed or deposited on the substrate, and then eliminated after formation of the mobile membrane or electrode.

60. Process according to claim 58, the mobile electrode or membrane being made on the surface of a second substrate (1000) then assembled with the first (1200).

61. Process according to claim 59, the mobile electrode or membrane then being removed from the surface of the second substrate by thinning the second substrate.

62. Process according to one of claims 58 to 61, the means forming the pivot being formed on the first substrate.

## Patentansprüche

1. Elektrostatische Betätigungsvorrichtung umfassend:
- wenigstens eine mobile Elektrode genannte Elektrode (10, 33, 35, 37, 135, 137, 139, 210, 335, 337, 339), die wenigstens einen bezüglich eines Substrats (22, 123, 222, 322) beweglichen, flexiblen Teil umfasst,
- wenigstens zwei bezüglich des Substrats feststehende Elektroden (12, 14, 62, 64, 82, 84, 92, 94, 132, 134, 136), die sich auf einer selben Seite wie die bewegliche Elektrode befinden und jeweils einem Teil der beweglichen Elektrode zugewandt sind,
- Mittel (18, 28, 98, 158, 198, 398, 399), die wenigstens ein Lager wenigstens eines Teils der beweglichen Elektrode bilden, wobei sich die bewegliche Elektrode auf das Lager abstützen kann, wenn eine der feststehenden Elektroden den Teil der beweglichen Elektrode anzieht, dem gegenüber sich diese feststehende Elektrode befindet, und sich der andere Teil der beweglichen Elektrode unter der Wirkung mechanischer Rückstellkräfte vom Substrat entfernen kann.

2. Vorrichtung gemäß Anspruch 1, wobei die bewegliche Elektrode wenigstens einen beweglichen Teil entlang wenigstens einer Richtung senkrecht zu diesem Substrat umfasst.

3. Vorrichtung gemäß Anspruch 1 oder 2, wobei die beiden feststehenden Elektroden durch eine auf dem Substrat und/oder der beweglichen Elektrode ausgebildete Isolierschicht (20, 120, 220, 224, 320) von der beweglichen Elektrode getrennt sind.

4. Vorrichtung gemäß einem der Ansprüche 1 bis 3, wobei der bewegliche Teil der beweglichen Elektrode durch eine Stütze (33, 34, 36) mit einer Membrane (30) verbunden ist.

5. Vorrichtung gemäß einem der Ansprüche 1 bis 4, wobei die das Lager bildenden Mittel wenigstens eine bezüglich des Substrats feststehende Stütze (18, 98, 158, 198, 398, 399) umfassen.

6. Vorrichtung gemäß einem der Ansprüche 1 bis 4, wobei die das Lager bildenden Mittel wenigstens einen Arm (28), der bezüglich des beweglichen Teils seitlich angeordnet ist, oder zwei Arme umfassen, die an beiden Seiten des beweglichen Teils angeordnet sind.

7. Vorrichtung gemäß einem der Ansprüche 1 bis 6, wobei der bewegliche Teil der beweglichen Elektrode einen Winkel (77) bildet.

8. Vorrichtung gemäß einem der Ansprüche 1 bis 6, die vier Elektroden (82, 84, 92, 94) umfasst, die paarweise einander zugewandt angeordnet sind, wobei die bewegliche Elektrode zwei über Kreuz angeordnete bewegliche Teile umfasst.

9. Vorrichtung gemäß Anspruch 8, die zwei Lager (79, 80) umfasst.

10. Vorrichtung gemäß einem der Ansprüche 1 bis 9, wobei die bewegliche Elektrode wenigstens einen in das Substrat oder die lsolierschicht eingelassenen oder darauf befestigten Teil umfasst.

11. Vorrichtung gemäß einem der Ansprüche 1 bis 10, wobei jede feststehende Elektrode wenigstens einem Ende der beweglichen Elektrode zugewandt auf einer Seite der das Lager bildenden Mittel angeordnet ist.

12. Vorrichtung gemäß einem der Ansprüche 1 bis 6, wobei die bewegliche Elektrode wenigstens zwei bewegliche Teile (135, 137, 139) umfasst, wobei jedes an einem seiner Enden frei ist und eine feststehende Elektrode (132, 134, 136) jedem beweglichen Teil (135, 137, 139) zugewandt ist.

13. Vorrichtung gemäß Anspruch 12, wobei die bewegliche Elektrode drei bewegliche Teile (135, 137, 139) umfasst, wobei die feststehenden Elektroden drei an der Zahl sind (132, 134, 136) und jede einem Teil der beweglichen Elektrode zugewandt ist.

14. Vorrichtung gemäß Anspruch 12 oder 13, wobei die beweglichen Teile der beweglichen Elektrode im Wesentlichen von länglicher Form sind und seitlich oder im Winkel zueinander versetzt sind.

15. Vorrichtung gemäß einem der Ansprüche 1 - 6, die drei feststehende Elektroden umfasst, wobei der bewegliche Teil drei Streifen (135, 137, 139) umfasst, die über ein Ende (150) verbunden sind.

16. Elektrostatische Betätigungsvorrichtung, umfassend:
- wenigstens einen bezüglich eines Substrats (22, 123) beweglicher und flexibler Teil oder Membran genannten Teil oder Membran, wobei dieser Teil wenigstens zwei Elektroden (13, 15, 135, 137, 139) umfasst, die voneinander durch einen elektrisch isolieronden Teil (11, 141) getrennt sind,
- wenigstens eine bezüglich des Substrats feststehende Elektrode (17, 133), die sich auf einer selben Seite wie der bewegliche Teil befindet und wovon ein erster Teil und ein zweiter Teil jeweils einer Elektrode des beweglichen Teils zugewandt sind,
- Mittel (18, 28, 98, 158, 198, 398, 399), die wenigstens ein Lager für wenigstens einen Teil des flexiblen oder beweglichen Teils oder Membran bilden, die sich auf das Lager abstützen können, wenn eine der feststehenden Elektroden eine der Elektroden des flexiblen oder beweglichen Teils oder Membran anzieht, wobei sich die andere bewegliche Elektrode unter der Wirkung mechanischer Rückstellkräfte von dem Substrat entfernen kann.

17. Vorrichtung gemäß Anspruch 16, wobei sich der bewegliche Teil entlang wenigstens einer Richtung senkrecht zu dem Substrat bewegen kann.

18. Vorrichtung gemäß Anspruch 16 oder 17, wobei die beiden feststehenden Elektroden durch eine auf dem Substrat und/oder der beweglichen Elektrode ausgebildete Isolierschicht (20, 120, 220, 224, 320) von der beweglichen Elektrode getrennt sind.

19. Vorrichtung gemäß einem der Ansprüche 16 bis 18, wobei der bewegliche Teil durch eine Stütze (33, 34, 36) mit einer Membrane (30) verbunden ist.

20. Vorrichtung gemäß einem der Ansprüche 16 bis 19, wobei die das Lager bildenden Mittel wenigstens eine bezüglich des Substrats feststehende Stütze (18, 98, 158, 198, 398, 399) umfassen.

21. Vorrichtung gemäß einem der Ansprüche 16 bis 20, wobei die das Lager bildenden Mittel wenigstens einen Arm (28), der bezüglich des beweglichen Teils seitlich angeordnet ist, oder zwei Arme umfassen, die an beiden Seiten des beweglichen Teils angeordnet sind.

22. Vorrichtung gemäß einem der Ansprüche 16 bis 21, wobei der bewegliche Teil einen Winkel (77) bildet.

23. Vorrichtung gemäß einem der Ansprüche 16 bis 22, die vier Elektroden (82, 84, 92, 94) umfasst, die paarweise einander zugewandt angeordnet sind, wobei der bewegliche Teil zwei über Kreuz angeordnete bewegliche Teile umfasst.

24. Vorrichtung gemäß Anspruch 23, die zwei Lager (79, 80) umfasst.

25. Vorrichtung gemäß einem der Ansprüche 16 bis 25, wobei der bewegliche Teil wenigstens einen in das Substrat oder die Isolierschicht eingelassenen oder darauf befestigten Teil umfasst.

26. Vorrichtung gemäß einem der Ansprüche 16 bis 25, wobei jede feststehende Elektrode wenigstens einem Ende der beweglichen Elektrode zugewandt auf einer Seite der das Lager bildenden Mittel angeordnet ist.

27. Vorrichtung gemäß einem der Ansprüche 16 bis 21, wobei der bewegliche Teil wenigstens zwei bewegliche Elektroden (135, 137, 139) umfasst, die über einen Isolierteil (141) mit einem Ende verbunden sind, wobei jede bewegliche Elektrode an einem ihrer Enden frei ist und eine feststehende Elektrode (132, 134, 136) jeder beweglichen Elektrode (135, 137, 139) zugewandt ist.

28. Vorrichtung gemäß Anspruch 27, wobei der bewegliche Teil drei bewegliche Elektroden (135, 137, 139) umfasst.

29. Vorrichtung gemäß Anspruch 27 oder 28, wobei die beweglichen Elektroden im Wesentlichen von länglicher Form sind und seitlich oder im Winkel zueinander versetzt sind.

30. Vorrichtung gemäß einem der Ansprüche 16 bis 29, die wenigstens zwei feststehende Elektroden umfasst.

31. Vorrichtung gemäß einem der Ansprüche 1 bis 30, wobei ein elektrisches Kontaktelement (196, 350) auf dem beweglichen Teil befestigt ist.

32. Vorrichtung gemäß Anspruch 1 oder 16, wobei die bewegliche Elektrode, die feststehenden Elektroden und das Lager im Wesentlichen in einer Ebene auf der Substratoberfläche ausgeführt sind.

33. Vorrichtung gemäß einem der vorangehenden Ansprüche, wobei wenigstens eine bewegliche Elektrode magnetische oder teilweise magnetische Mittel (232, 234) umfasst und die Vorrichtung außerdem bezüglich des Substrats feststehende magnetische Mittel (242, 244, 342, 344) umfasst, die mit den magnetischen Mitteln der beweglichen Elektrode einen Kontakt herstellen können.

34. Vorrichtung gemäß Anspruch 33, wobei die bei einem Kontakt ausgeübte elektrostatische Kraft und die magnetischen Kräfte einen relativen Unterschied von mindestens 10 % aufweisen.

35. Vorrichtung gemäß Anspruch 33 oder 34, wobei die bei einem Kontakt ausgeübte(n) elektrostatische(n) Kraft (Kräfte) größer als die mechanischen Rückstellkräfte ist (sind).

36. Vorrichtung gemäß Anspruch 35, wobei die bei einem Kontakt ausgeübte elektrostatische Kraft und magnetischen Kräfte mindestens 10 Mal größer als die mechanischen Rückstellkräfte sind.

37. Vorrichtung gemäß einem der Ansprüche 33 bis 36, wobei die magnetischen Mittel der beweglichen Elektrode und die feststehenden magnetischen Mittel wenigstens zwei stabile Positionen der Vorrichtung definieren.

38. Vorrichtung gemäß einem der Ansprüche 1 bis 37, die außerdem wenigstens eine feststehende Elektrode und eine bewegliche Elektrode, die eine Kapazität definieren, umfasst.

39. Vorrichtung gemäß einem der Ansprüche 1 bis 38, wobei die das Lager bildenden Mittel den Erhalt eines Punkts einer beweglichen Elektrode in einer Höhe zwischen 50 nm und 20 µm bezüglich des Substrats ermöglicht.

40. Betätigungsvorrichtung eines optischen Bauteils umfassend:
- wenigstens eine elektrostatische Betätigungsvorrichtung gemäß einem der Ansprüche 1 bis 39,
- Trägermittel (610, 617) für ein optisches Bauteil, die mit der Membran oder der beweglichen Elektrode der Betätigungsvorrichtung verbunden sind und durch diese Membran oder diese Elektrode bei der Verschiebung dieser Membran oder dieser Elektrode mitverschoben werden.

41. Vorrichtung gemäß Anspruch 40, wobei wenigstens eine der Elektroden einer der Betätigungsvorrichtungen einen länglichen Körper (621.1) mit einer ersten Breite entlang einer ersten Richtung und einem Starter genannten Ende (621.3) mit einer zweiten, größeren Breite als diese erste Breite umfasst.

42. Vorrichtung gemäß einem der Ansprüche 40 oder 41, die zwei elektrostatische Betätigungsvorrichtungen gemäß einem der Ansprüche 1 bis 39 umfasst, wobei die Trägermittel (610, 617) eines optischen Bauteils mit diesen beiden Vorrichtungen verbunden sind.

43. Vorrichtung gemäß Anspruch 42, wobei die beiden Betätigungsvorrichtungen an jeder Seite der Trägermittel eines optischen Bauteiles angeordnet sind.

44. Vorrichtung gemäß Anspruch 42, wobei die beiden Betätigungsvorrichtungen auf derselben Seite der Trägermittel eines optischen Bauteils angeordnet sind.

45. Vorrichtung gemäß einem der Ansprüche 42 bis 44, wobei die beiden Betätigungsvorrichtungen sich entlang zweier im Wesentlichen zueinander paralleler Richtungen erstrecken.

46. Vorrichtung gemäß einem der Ansprüche 42 bis 44, wobei jede der beiden Betätigungsvorrichtungen einen gebogenen Teil umfasst.

47. Vorrichtung gemäß Anspruch 46, wobei die beiden Betätigungsvorrichtungen über wenigstens ein gemeinsames Ende (621.3) mechanisch verbunden sind.

48. Vorrichtung gemäß einem der Ansprüche 42 bis 47, die zwei Mitführarme (623) umfasst, die die beiden elektrostatischen Betätigungsvorrichtungen mit den Trägermitteln (610, 617) eines optischen Bauteils verbinden.

49. Vorrichtung gemäß einem der Ansprüche 42 bis 48, die ein Substrat umfasst, in dem ein Hohlraum (626) eine Lagerung der Trägermittel des optischen Bauteils ermöglicht.

50. Vorrichtung gemäß einem der Ansprüche 42 bis 49, die außerdem einen Rahmen (615) und Verbindungsmittel (613) umfasst, die die elektrostatische Betätigungsvorrichtung und die Trägermittel (610, 617) eines optischen Bauteils mit dem Rahmen verbinden.

51. Vorrichtung gemäß Anspruch 50, wobei die Verbindungsmittel (613) Dreharme (613) umfassen.

52. Vorrichtung gemäß Anspruch 42, wobei die Trägermittel (800) einen eine Krümmung aufweisenden, geschlossenen Umriss besitzt.

53. Vorrichtung gemäß Anspruch 52, wobei die elektrostatischen Aktivierungsmittel dem Umriss folgend oder längs dieses Umrisses angeordnet sind.

54. Vorrichtung gemäß Anspruch 52, wobei die elektrostatischen Aktivierungsmittel bezüglich dieses Umrisses radial angeordnet sind.

55. Vorrichtung gemäß einem der Ansprüche 52 bis 54, wobei der Umriss kreisförmig ist.

56. Vorrichtung gemäß einem der Ansprüche 52 bis 55, die außerdem Dehnungsmittel (804) umfasst, die zwischen den elektrostatischen Aktivierungsmitteln und den Trägermitteln (800) angeordnet sind.

57. Vorrichtung gemäß Anspruch 56, wobei die Dehnungsmittel (804) wenigstens eine Dehnungsschleife umfassen.

58. Verfahren zur Herstellung einer Vorrichtung gemäß einem der Ansprüche 1 bis 39, umfassend:
- die Herstellung eines ersten Substrats, das eine oder zwei bezüglich des Substrats feststehende Elektroden umfasst,
- die Herstellung ein Lager bildender Mittel (630) und einer beweglichen Elektrode oder Membran, die wenigstens zwei durch einen Isolierteil getrennte Elektroden umfasst, wobei diese Elektrode oder Membran bezüglich des Substrats beweglich ist.

59. Verfahren gemäß Anspruch 58, wobei die bewegliche Elektrode oder Membran auf einer auf dem Substrat gebildeten oder abgeschiedenen Opferschicht (532) hergestellt wird, die dann nach der Bildung der beweglichen Membran oder Elektrode entfernt wird.

60. Verfahren gemäß Anspruch 58, wobei die bewegliche Elektrode oder Membran auf der Oberfläche eines zweiten Substrats (1000) hergestellt wird, das anschließend mit dem ersten (1200) zusammengefügt wird.

61. Verfahren gemäß Anspruch 59, wobei die bewegliche Elektrode oder Membran anschließend von der Oberfläche des zweiten Substrats durch dessen Ausdünnen abgelöst wird.

62. Verfahren gemäß einem der Ansprüche 58 bis 61, wobei die das Lager bildenden Mittel auf dem ersten Substrat ausgebildet sind.
